# EUROPEAN PATENT APPLICATION

(11) **EP 4 769 215 A1**
(43) Date of publication of application: **01.07.2026**
(21) Application number: 25222275.7
(22) Date of filing: 10.12.2025
(51) Int. Cl.: G06K 19/06, H01M 10/04, H01M 10/48

(54) **SECONDARY BATTERY MANUFACTURING SYSTEM AND METHOD OF TRACKING CELL THEREOF**

(30) Priority: 24.12.2024 KR 20240196337; 21.04.2025 KR 20250051590
(71) Applicant: LG Energy Solution, Ltd., Seoul 07335 (KR)
(72) Inventor: CHOI, Seongmin, 07335 Seoul (KR); KIM, Min Su, 07335 Seoul (KR); KIM, Junbeom, 07335 Seoul (KR); PARK, Kyoungchan, 07335 Seoul (KR); PARK, Yeongheon, 07335 Seoul (KR); PARK, Jong Hyun, 07335 Seoul (KR); LEE, Sung Gyu, 07335 Seoul (KR)
(74) Representative: BCKIP Part mbB

(57) **Abstract**

Provided is a method of tracking a cell, the method including obtaining (P110), in a first sub-process included in a secondary battery manufacturing process, an electrode identifier (ID) identifying to a unit electrode, obtaining (P120), in a second sub-process included in the secondary battery manufacturing process, a cell ID for identifying to a semi-finished cell including the unit electrode, and matching (P130) the electrode ID and the cell ID.

## Description

### CROSS-REFERENCE TO RELATED APPLICATION(S)

This application claims the benefit of priority on Korean Patent Application No. 10-2024-0196337 filed on December 24, 2024 and Korean Patent Application No. 10-2025-0051590 filed on April 21, 2025 in the Korean Intellectual Property Office.

### TECHNICAL FIELD OF THE INVENTION

The present invention relates to a secondary battery manufacturing system and a method of tracking a cell thereof.

### BACKGROUND

Active research and development has recently been conducted on secondary batteries. Here, the secondary batteries refer to batteries that may be charged and discharged and encompass existing ones such as nickel-cadmium (Ni-Cd) batteries and nickel-metal hydride (Ni-MH) batteries and recent ones such as lithium ion batteries. Among the secondary batteries, lithium ion batteries have much higher energy density compared to the existing Ni-Cd batteries and Ni-MH batteries. Furthermore, lithium ion batteries, which may be fabricated in small sizes and with light weight to be used as power sources for mobile devices, are emerging as a next-generation energy storage medium as the range of use thereof has recently expanded to be used for electric vehicles.

The secondary batteries are manufactured through an electrode process, an assembly process, and an activation process. The yield and reliability of a secondary battery manufacturing process may be increased by securing the traceability of the manufacturing process. Accordingly, various studies are performed to secure the traceability of the secondary battery manufacturing process.

### SUMMARY OF THE INVENTION

It is one object of the present invention to provide a secondary battery manufacturing system and method of tracking a cell of the secondary battery that can increase cell traceability.

Another object of the invention is to provide a secondary battery manufacturing system and method that clarifies a target range of a defective cell.

To achieve these objects, the present invention provides a method in accordance with claim 1 and a system in accordance with claim 20.

The present invention is based on the idea of identifier (ID) matching between at least two sequential sub-processes and process data matching.

The present disclosure is not limited to the technical goals described above, and other unstated technical goals may be inferred from example embodiments below.

According to an aspect of the invention, there is provided a method of tracking a cell. Particularly, the method may be a computer-implemented method. The method may include obtaining, based on a first sub-process included in a secondary battery manufacturing process, an electrode identifier (ID) corresponding to a unit electrode, obtaining, based on a second sub-process included in the secondary battery manufacturing process, a cell ID corresponding to a semi-finished cell including the unit electrode, and matching the electrode ID and the cell ID.

According to an example embodiment, the first sub-process may be or include a notching process for forming an electrode tab on an electrode sheet, and the obtaining of the electrode ID may include obtaining the electrode ID by detecting a first code object formed on the electrode tab during the first sub-process, in particular, during the notching process. The first code object may be physically marked on the electrode. Generally, the first code object may be any kind of machine readable information, such as, for example, a bar code, a QR-code, a sequence of signs such as letters, numbers, symbols, etc., or similar.

According to an example embodiment, the method may further include marking the first code object on the electrode tab during the first sub-process. The first code object may be marked, for example, through forming a marking directly on the surface of the electrode tab, e.g., by a laser or a printer. Alternatively, a tag or other object carrying the code object may be attached to the tab, e.g., through bonding.

According to an example embodiment, the second sub-process may be a lamination process for forming the semi-finished cell by bonding the unit electrode on which an electrode tab is formed and a separator, and the semi-finished cell may be a unit cell composed of the unit electrode and the separator, and the obtaining of the cell ID may include obtaining the cell ID by detecting a first code object formed on the electrode tab during the second sub-process.

According to some embodiments, the second sub-process may include the lamination process for forming the semi-finished cell by bonding the unit electrode on which an electrode tab is formed and a separator, and the semi-finished cell may be a unit cell composed of the unit electrode and the separator. According to some embodiments, obtaining the cell ID may comprise obtaining a unit cell ID by detecting, during the second sub-process in particular, during the lamination process, a first code object formed on the electrode tab.

According to an example embodiment, the second sub-process may be a stacking process for forming the semi-finished cell by stacking a plurality of unit cells including a unit cell composed of the unit electrode and a separator, and the semi-finished cell may be a stack-type electrode assembly formed by stacking the plurality of unit cells, and the obtaining of the cell ID may include obtaining the cell ID by detecting a second code object formed on the stack-type electrode assembly during the second sub-process.

According to some embodiments, the second sub-process may include a stacking process for forming the semi-finished cell by stacking a plurality of unit cells including a unit cell composed of the unit electrode and a separator. For example, the semi-finished cell may be a stack-type electrode assembly formed by stacking the plurality of unit cells. According to an example embodiment, obtaining of the cell ID may comprise obtaining an electrode assembly ID by detecting, during the second sub-process, in particular, during the stacking process, a second code object formed on the stack-type electrode assembly.

According to an example embodiment, the method may further include obtaining a plurality of unit cell IDs corresponding one-to-one to the plurality of unit cells during the second sub-process, for example, during the stacking process. That is, each unit cell ID identifies one of the plurality of unit cells that are stacked. Matching of the electrode ID and the cell ID may include matching the plurality of unit cell IDs and the cell ID. Specifically, matching of the electrode ID and the cell ID may comprise matching the plurality of unit cell IDs and the electrode assembly ID.

According to an example embodiment, the second code object may be formed on an electrode tab of an outermost unit cell among the plurality of unit cells included in the stack-type electrode assembly. For example, the second code object may correspond to the first code object marked on the electrode tab of the unit electrode of an outermost unit cell of the stack. Thereby, one single ID, e.g., the ID of the unit electrode of an outermost unit cell of the stack may be used to track a plurality of unit cells and/or a plurality of unit electrodes contained within one cell stack.

According to another example embodiment, the second code object may be formed on a bonding tape for bonding the plurality of unit cells included in the stack-type electrode assembly.

According to an example embodiment, the method may further include marking the second code object on the bonding tape during the second sub-process.

That is, a new code object may be physically marked on the bonding tape. For example, the second code object may be generated through forming a marking directly on the surface of the electrode tab, e.g., by a laser or a printer. Alternatively, a tag or other object carrying the code object may be attached to the bonding tape, e.g., through bonding. A further option is that the bonding tape itself already is equipped with markings at predefined intervals.

Irrespective of how and where it is formed, the second code object, according to some embodiments, may be any kind of machine-readable information, such as, for example, a bar code, a QR-code, a sequence of signs such as letters, numbers, symbols, etc., or similar.

According to an example embodiment, the second sub-process may be a stacking process for forming the semi-finished cell by alternately arranging and stacking the unit electrode and a separator, and the semi-finished cell may be a stack-type electrode assembly formed by alternately arranging and stacking the unit electrode and the separator, and the obtaining of the cell ID may include obtaining the cell ID by detecting a second code object formed on the stack-type electrode assembly during the second sub-process.

According to some embodiments, the second sub-process may include a stacking process for forming the semi-finished cell by alternately arranging and stacking the unit electrode and a separator, and the semi-finished cell may be a stack-type electrode assembly formed by alternately arranging and stacking the unit electrode and the separator. Optionally, obtaining of the cell ID may comprise obtaining an electrode assembly ID by detecting, during the second sub-process, in particular, during the stacking process, a second code object formed on the stack-type electrode assembly.

Similar as described above, the second code object may be formed on an electrode tab of an outermost unit cell among the plurality of unit cells included in the stack-type electrode assembly, or the second code object may be formed on a bonding tape for bonding the plurality of unit cells included in the stack-type electrode assembly. Further optionally, the second code object may be marked on the bonding tape during the second sub-process, or the bonding tape itself already may already be equipped with markings at predefined intervals.

According to an example embodiment, the second sub-process may be a folding process for forming the semi-finished cell by folding a plurality of unit cells including a unit cell composed of the unit electrode and a separator, and the semi-finished cell may be a folding-type electrode assembly formed by folding the plurality of unit cells, and the obtaining of the cell ID may include obtaining the cell ID by detecting a third code object formed on the folding-type electrode assembly during the second sub-process.

According to some embodiments, the second sub-process may include a folding process for forming the semi-finished cell by folding a plurality of unit cells including a unit cell composed of the unit electrode and a separator, and the semi-finished cell may be a folding-type electrode assembly formed by folding the plurality of unit cells. Optionally, obtaining of the cell ID may comprise obtaining an electrode assembly ID by detecting, during the second sub-process, in particular, during the folding process, a third code object formed on the folding-type electrode assembly.

According to an example embodiment, the third code object may be formed on an electrode tab of an outermost unit cell among the plurality of unit cells included in the folding-type electrode assembly.

According to an example embodiment, the second sub-process may be a packaging process for forming a battery cell by packaging an electrode assembly including the unit electrode in a cell case, and the semi-finished cell may be the battery cell, and the obtaining of the cell ID may include obtaining the cell ID by detecting a fourth code object formed on the battery cell during the second sub-process.

According to some embodiments, the second sub-process includes a packaging process for forming a battery cell by packaging an electrode assembly including the unit electrode in a cell case, and the semi-finished cell may be the battery cell.

According to an exemplary embodiment, obtaining of the cell ID may comprise obtaining a battery cell ID by detecting, during the second sub-process, in particular, the packaging process, a fourth code object formed on the battery cell.

According to an example embodiment, the method may further include obtaining an electrode assembly ID corresponding to the electrode assembly during the second sub-process, and the matching of the electrode ID and the cell ID may include matching the electrode assembly ID and the cell ID, in particular, the battery cell ID. For example, the electrode ID of a unit electrode, as described above, may be matched in the lamination process with a unit cell ID, and the unit cell IDs of the plurality of unit cells contained in the electrode assembly may be matched with the electrode assembly ID in the stacking or folding process. Hence, by matching the electrode assembly ID with the battery cell ID, the electrode ID can be matched with the (battery) cell ID through the unit cell ID matched with the electrode assembly ID.

According to an example embodiment, the fourth code object may be formed on a lead of the battery cell or the cell case.

According to an example embodiment, the method may further include marking the fourth code object on the lead or the cell case during the second sub-process, in particular, during the packaging process. For example, the fourth code object may be generated through forming a marking directly on the battery cell, e.g., by a laser or a printer. Alternatively, a tag or other object carrying the code object may be attached to the battery cell, e.g., through bonding.

According to an example embodiment, the method may include obtaining a roll map of an electrode sheet from which the unit electrode included in the semi-finished cell is obtained, wherein the roll map is or has been generated for an electrode manufacturing process included in the secondary battery manufacturing process. The electrode manufacturing process may include various electrode sub-processes such as a coating process of coating a conductive sheet with an active slurry material, a drying process of drying the slurry material and/or a roll-pressing process of rolling the coated electrode, and a slitting process of cutting the rolled electrode, e.g., in a length direction. In the roll map, inspection and/or measurement data on the electrode obtained during at least one of the electrode sub-processes are mapped with position coordinates of the electrode sheet representing positions at which the inspection and/or measurement data has been obtained. The roll map may be displayed as a visual imitation of the electrode sheet during the electrode manufacturing process, wherein at least some of the inspection and/or measurement data is displayed at a location corresponding to the position coordinates to which it is mapped.

According to some embodiments, the method may include calculating, based on the electrode ID, a position coordinate of the unit electrode on the roll map, and matching the electrode ID and the position coordinate on the roll map. For example, when the unit electrode is obtained from the electrode sheet by cutting, the position coordinate(s) corresponding to the length section forming the unit electrode may be matched with the electrode ID. Through these coordinate(s), the position coordinate on the roll map may be matched with the electrode ID. Consequently, the inspection and/or measurement data contained in the roll map may easily be tracked or obtained through the electrode ID.

According to an example embodiment, the method may further include obtaining, in the first sub-process, at least one of first process data and first inspection data and mapping at least one of the first process data and the first inspection data to at least one of the electrode ID and the cell ID. For example, data on the notching process may be obtained as first process data and first inspection data and mapped with the electrode ID and the cell ID, e.g., with one or more of the unit cell ID, the electrode assembly ID, and the battery cell ID.

According to an example embodiment, the first process data may include at least one of information related to equipment that performs the first sub-process on the unit electrode and a time in which the first sub-process is performed.

According to some embodiments, the first inspection data may include at least one of measurement information obtained by measuring a dimension related to the unit electrode, e.g., in a scanning manner, a vision image obtained by capturing an appearance of the unit electrode, and state information of the unit electrode inspected based on at least one of the measurement information and the vision image. The state information may, for example, represent whether quality indicators represented by the measurement information and/or vision image meet predefined requirements or not. That is, the state information may, for example, be "normal" or "discard".

According to an example embodiment, the method may further include obtaining, in a third sub-process included in the secondary battery manufacturing process, a second cell ID corresponding to a second semi-finished cell including the semi-finished cell and matching the second cell ID with at least one of the electrode ID and the cell ID.

According to an example embodiment, the method may further include obtaining, in the first sub-process, at least one of first process data and first inspection data, obtaining, in the second sub-process, at least one of second process data and second inspection data, and mapping, after the second cell ID is obtained, at least one of the first process data and the first inspection data and at least one of the second process data and the second inspection data to the second cell ID.

According to another aspect of the invention, there is provided a secondary battery manufacturing system including a first sub-equipment configured to perform a first sub-process included in a secondary battery manufacturing process, a second sub-equipment configured to perform a second sub-process included in the secondary battery manufacturing process, and a controller. The controller may be configured to obtain an electrode identifier (ID) corresponding to a unit electrode from the first sub-equipment, obtain a cell ID corresponding to a semi-finished cell including the unit electrode from the second sub-equipment, and match the electrode ID and the cell ID. Generally, the controller may be configured to, by using the first and second sub-equipment, carry out the method of tracking a cell according to any one of the embodiments described above.

According to an example embodiment, the controller may be configured to process cell tracking data obtained from the first sub-equipment and the second sub-equipment.

According to an example embodiment, the first sub-process may be or include a notching process for forming an electrode tab on an electrode sheet.

According to some embodiments, the second sub-process may be or include a lamination process for forming the semi-finished cell by bonding the unit electrode on which the electrode tab is formed and a separator.

According to some embodiments, the semi-finished cell may be a unit cell composed of the unit electrode and the separator, and the first sub-equipment may be configured to obtain the electrode ID by detecting a first code object formed on the electrode tab during the first sub-process.

According to some embodiments, the second sub-equipment may be configured to obtain the cell ID by detecting the first code object formed on the electrode tab during the second sub-process. That is, in the second sub-process, the second sub-equipment may obtain a unit cell ID identifying the respective unit cell as the cell ID.

According to an example embodiment, the second sub-process may be or include a stacking process or a folding process for forming the semi-finished cell by stacking or folding a plurality of unit cells including a unit cell composed of the unit electrode and a separator, and the semi-finished cell may be an electrode assembly formed by stacking or folding the plurality of unit cells. Optionally, the second sub-equipment may be configured to obtain the cell ID by detecting a second code object formed on the electrode assembly during the second sub-process. In other words, in the second sub-process, the second sub-equipment may obtain a unit cell ID identifying the respective unit cell as the cell ID.

According to an example embodiment, the second sub-process may be or include a stacking process for forming the semi-finished cell by alternately arranging and stacking the unit electrode and a separator, and the semi-finished cell may be a stack-type electrode assembly formed by alternately arranging and stacking the unit electrode and the separator. Optionally, the second sub-equipment may be configured to obtain the cell ID by detecting a second code object formed on the stack-type electrode assembly during the second sub-process. In this case, in the second sub-process, the second sub-equipment may obtain, for example, a unit cell ID identifying the respective unit cell as the cell ID

According to an example embodiment, the second sub-process may be or include a packaging process for forming a battery cell by packaging an electrode assembly including the unit electrode in a cell case, and the semi-finished cell may be the battery cell.

According to an exemplary embodiment, the second sub-equipment may be configured to obtain the cell ID by detecting a fourth code object formed on the battery cell during the second sub-process. For example, the second sub-equipment may be configured to obtain, in the second sub-process, a battery cell ID as the cell ID identifying the battery cell.

According to an example embodiment, the controller may be configured to obtain at least one of first process data and first inspection data from the first sub-equipment and map at least one of the first process data and the first inspection data to at least one of the electrode ID and the cell ID.

According to an example embodiment, the first process data may include at least one of information related to the first sub-equipment that performs the first sub-process on the unit electrode and a time in which the first sub-process is performed by the first sub-equipment, and the first inspection data may include at least one of measurement information obtained by measuring a dimension related to the unit electrode in a scanning manner, a vision image obtained by capturing an appearance of the unit electrode, and state information of the unit electrode inspected based on at least one of the measurement information and the vision image.

According to an example embodiment, the secondary battery manufacturing system may further include a third sub-equipment configured to perform a third sub-process included in the secondary battery manufacturing process, and the controller may be configured to obtain a second cell ID corresponding to a second semi-finished cell including the semi-finished cell from the third sub-equipment and match the second cell ID with at least one of the electrode ID and the cell ID.

According to an example embodiment, the controller may be configured to obtain at least one of the first process data and the first inspection data from the first sub-equipment, obtain at least one of second process data and second inspection data from the second sub-equipment, and map, after the second cell ID is obtained, at least one of the first process data and the first inspection data and at least one of the second process data and the second inspection data to the second cell ID.

According to example embodiments, it is possible to increase traceability in manufacturing a secondary battery.

Effects of example embodiments are not limited to those described above, and other effects not mentioned herein may be clearly understood by those skilled in the art from the appended claims.

The features and advantages disclosed herein in connection with one aspect of the invention are also disclose for the other aspects and vice versa.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a block diagram of a secondary battery manufacturing system according to an example embodiment of the present invention;
FIG. 2 is a diagram for illustrating an example in which an electrode identifier (ID) corresponding to a unit electrode is obtained based on a notching process by a secondary battery manufacturing system according to an example embodiment of the present invention;
FIG. 3 is a diagram for illustrating an example in which a cell ID corresponding to a semi-finished cell is obtained based on a lamination process by a secondary battery manufacturing system according to an example embodiment of the present invention;
FIG. 4 is a diagram for illustrating an example in which a cell ID corresponding to a semi-finished cell is obtained based on a stacking process by a secondary battery manufacturing system according to an example embodiment of the present invention;
FIG. 5 is a diagram for illustrating an example in which a cell ID corresponding to a semi-finished cell is obtained based on a folding process by a secondary battery manufacturing system according to an example embodiment of the present invention;
FIG. 6 is a diagram for illustrating an example in which a cell ID corresponding to a semi-finished cell is obtained based on a packaging process for a stack-type electrode assembly by a secondary battery manufacturing system according to an example embodiment of the present invention;
FIG. 7 is a diagram for illustrating an example in which a cell ID corresponding to a semi-finished cell is obtained based on a packaging process for a folding-type electrode assembly by a secondary battery manufacturing system according to an example embodiment of the present invention;
FIG. 8 is a block diagram of a secondary battery manufacturing system for illustrating a method of tracking a cell according to an example embodiment of the present invention;
FIG. 9 is a block diagram of a secondary battery manufacturing system for illustrating a method of tracking a cell according to an example embodiment of the present invention;
FIG. 10 is a diagram for illustrating a method, performed by a secondary battery manufacturing system, of managing data obtained in each process according to an example embodiment of the present invention;
FIG. 11 is a diagram showing roll map data illustrated in FIG. 10;
FIG. 12 is a flowchart of operations of a secondary battery manufacturing system according to an example embodiment of the present invention;
FIG. 13 is a flowchart of operations of a secondary battery manufacturing system according to an example embodiment of the present invention;
FIG. 14 is a flowchart of operations of a secondary battery manufacturing system according to an example embodiment of the present invention;
FIG. 15 is a flowchart of operations of a secondary battery manufacturing system according to an example embodiment of the present invention;
FIG. 16 is a flowchart of operations of a secondary battery manufacturing system according to an example embodiment of the present invention; and
FIG. 17 is a flowchart of operations of a secondary battery manufacturing system according to an example embodiment of the present invention.

### DETAILED DESCRIPTION OF EXAMPLARY EMBODIMENTS

In describing example embodiments, a description of technical content widely known in the art to which the present invention pertains and not directly related to the present invention is omitted. This is to more clearly communicate without obscuring the present invention by omitting unnecessary descriptions.

For the same reasons, some elements are exaggerated, omitted, or schematically illustrated in the accompanying drawings. Further, a size of each element does not exactly correspond to an actual size thereof. In each drawing, the same or corresponding elements are assigned the same reference numerals.

Advantages and features of the present invention and methods of accomplishing the same may be made apparent with reference to example embodiments described below in detail together with the accompanying drawings. However, the present invention is not limited to example embodiments provided below and may be implemented in multiple different forms. The example embodiments are provided so as to fully disclose the present invention and convey the invention to those of ordinary skill in the art to which the present invention pertains. The scope of the present invention is defined by the appended claims. Throughout the specification, like reference numerals refer to like elements.

Here, it will be understood that each block in flowcharts and combinations of the flowcharts may be performed by computer program instructions. Since these computer program instructions may be loaded into a processor of a general-purpose computer, a special-purpose computer, or another programmable data processing apparatus, the instructions performed by a processor of a computer or another programmable data processing apparatus may generate units for performing functions described in the flowchart block(s). The computer program instructions may be stored in a computer-usable or computer-readable memory intended for a computer or another programmable data processing apparatus to implement a function in a particular manner, and thus, the instructions stored in the computer-usable or computer-readable memory may generate an article of manufacture that incorporates instruction units for performing the functions described in the flowchart block(s). The computer program instructions may be loaded into a computer or another programmable data processing apparatus, and thus, the instructions for operating the computer or another programmable data processing apparatus by generating a computer-executable process as a series of operations are performed in the computer or another programmable data processing apparatus may provide operations for performing the functions described in the flowchart block(s).

Furthermore, each block may represent a portion of a module, segment, or code including one or more executable instructions for executing the specified logical function(s). It is also noted that functions mentioned in blocks may be performed out of order in some alternative examples. For example, two consecutive blocks may be performed at substantially the same time, or the blocks may be performed in reverse order depending on corresponding functions.

As used herein, the term "unit or part" refers to a software element or a hardware element such as a field programmable gate array (FPGA) and an application-specific integrated circuit (ASIC) and the "unit or part" performs particular roles. However, the "unit or part" is not limited to software or hardware. The "unit or part" may be present in an addressable storage medium or may be configured to execute one or more processors. Therefore, the "unit or part" may include, as an example, components, such as software components, object-oriented software components, class components, and task components, processes, functions, attributes, procedures, subroutines, segments of program code, drivers, firmware, microcode, circuits, data, databases, data structures, tables, arrays, and variables. Functions provided by components and "units or parts" may be combined into fewer components and "units or parts" or further separated into additional components and "units or parts." Furthermore, the elements and "units or parts" may be implemented to execute one or more central processing units (CPUs) within a device or a secure multimedia card.

The expression "at least one of a, b, and c" described throughout the specification may include "a alone," "b alone," "c alone," "a and b," "a and c," "b and c," or "all of a, b, and c."

Hereinafter, example embodiments of the present invention are described in detail with reference to the accompanying drawings to be easily implemented by those of ordinary skill in the art to which the present invention pertains. However, the present invention may be implemented in many different forms and is not limited to example embodiments described herein.

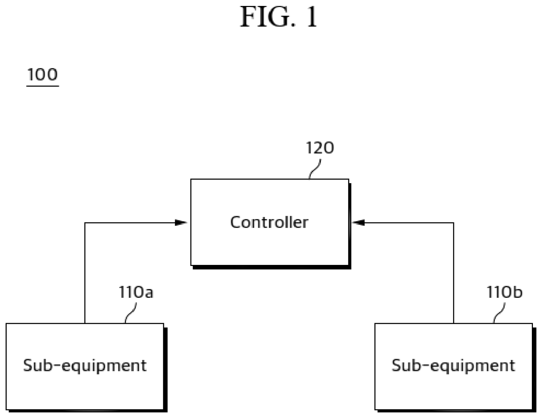

FIG. 1 is a block diagram of a secondary battery manufacturing system 100 according to an example embodiment of the present invention.

Referring to FIG. 1, the secondary battery manufacturing system 100 may include a first sub-equipment 110a that performs a first sub-process included in a secondary battery manufacturing process, a second sub-equipment 110b that performs a second sub-process included in the secondary battery manufacturing process, and a controller 120.

The secondary battery manufacturing system 100 may be configured to perform the secondary battery manufacturing process. Generally, the secondary battery manufacturing process may include a plurality of sub-processes. For example, the secondary battery manufacturing process may include an electrode manufacturing process, an assembly process, and an activation process of a secondary battery. The secondary battery manufacturing system 100 may be configured to perform the assembly process of the secondary battery. For example, the secondary battery manufacturing system 100 may be configured to perform the assembly process of a cylindrical battery, a prismatic battery, or a pouch-type battery, etc.

Battery cells included in the secondary battery may be divided largely into a jelly roll-based battery cell and a stacking/folding-based battery cell depending on configuration manners of electrode assemblies. The jelly roll-based battery cell may include a cylindrical or oval electrode assembly formed by winding a positive electrode, a negative electrode, and a separator interposed in between the positive and negative electrode and may be mainly applied to cylindrical batteries or some prismatic batteries. In contrast, the stacking/folding-based battery cell may include an electrode assembly formed in a manner of stacking or folding many unit electrodes, which have been obtained by cutting electrode sheets and a separator by a predetermined length. The stacking/folding-based battery cell may be mainly applied to pouch-type batteries or some prismatic batteries.

Depending on these configuration manners of electrode assemblies, the secondary battery manufacturing process may be configured differently. For example, the process of a jelly roll-based battery may be performed in a sequence of supplying an electrode roll, winding, inserting in a can, and welding, whereas the process of a stacking/folding-based battery may be performed in a sequence of cutting an electrode sheet, stacking (or folding), and packaging. Accordingly, forms and tracking units of a semi-finished cell defined in each process may also vary depending on the configuration manners of electrode assemblies.

Hereinafter, a case in which the secondary battery manufacturing process performed by the secondary battery manufacturing system 100 is a stacking/folding-based battery manufacturing process is described as an example. However, this is an example for convenience of description, and a method of tracking a cell of the present invention is not limited to the stacking/folding-based battery manufacturing process and may also be applied to a jelly roll-based battery manufacturing process.

The secondary battery manufacturing process may include a plurality of sub-processes, and each of the sub-equipment 110a and the sub-equipment 110b may be configured to perform at least one of the sub-processes, e.g., only one or two or more sub-processes. While FIG. 1 illustrates that the secondary battery manufacturing system 100 includes the sub-equipment 110a and the sub-equipment 110b, which are two, the number of sub-equipment is for illustrative purposes, and the present invention is not limited thereto.

According to an example embodiment, the secondary battery manufacturing process may include, for example, the first sub-process performed by the first sub-equipment 110a and the second sub-process performed by the second sub-equipment 110b. The second sub-process may be performed after the first sub-process is performed. According to an example embodiment, the sub-equipment 110a and the sub-equipment 110b may include at least one process apparatus for performing the respective sub-process, e.g., corresponding to each sub-equipment for a semi-finished product on a process line.

According to an example embodiment, the sub-equipment 110a and the sub-equipment 110b may further include at least one of a marking device for marking a code object on a semi-finished product on a process line and a reading device for identifying an identifier (ID) by detecting the code object formed on the semi-finished product. The code object may be an identification mark including information on an ID of the semi-finished product. That is, the code object may represent an ID in a coded form. For example, the code object may be implemented as at least one of a string-based code including numbers and/or characters, a one-dimensional code (for example, a barcode), and a two-dimensional code (for example, a data matrix and a quick response (QR) code). Generally, the code object may be provided as a machine-readable mark, preferably an optically readable mark. The code object may be physically formed on various semi-finished products described below and elements including these semi-finished products. For example, the code object may be formed on a surface of a target, e.g., by at least one of laser etching, inkjet printing, and attaching a label. The code object may be formed or applied to the respective semi-finished product by a marking device, an example of which will be described below. Here, each of the laser etching and the inkjet printing may engrave identification information in a thermal or noncontact manner.

This code object and an ID (for example, an electrode ID and a cell ID) which can be identified from the code object may be used for quality evaluation and manufacturing history tracking for each product after the secondary battery manufacturing process has been finished on the product. For example, at least some of the various code objects to be described below may be formed to be exposed outside on a semi-finished product in order to be detected by the reading device even after the manufacturing process has been finished on the product. Through this, identification, quality evaluation, and manufacturing history tracking may be performed using a corresponding code object available in a state of a final product. Further, each ID may be recognized by the controller 120 and associated with other IDs and/or data by the controller 120 and managed in real time and may be used to store and analyze a process condition for each product, an inspection result, and abnormality history in an integrated manner.

Furthermore, the present invention mainly describes code objects and ID identification related to a battery cell assembly process, but a code object may be similarly formed on an element of a battery module or a battery pack including battery cells, and through this, ID identification, quality management, and manufacturing history tracking may also be performed in units of modules or packs.

The sub-equipment 110a and the sub-equipment 110b may include a communication circuit that establishes a wired communication channel and/or a wireless communication channel between the sub-equipment 110a and the sub-equipment 110b and the controller 120 to transmit and receive data to and from the controller 120 through an established communication channel. Generally, the sub-equipment 110a and the sub-equipment 110b may be in signal communication with the controller 120 and/or with each other. Here, communication, in other words, data transmission and reception, may be performed in a wired or wireless manner. For example, the sub-equipment 110a and the sub-equipment 110b may transmit cell tracking data including at least one of an ID corresponding to a semi-finished product on a process line, process data, and inspection data to the controller 120 using the communication circuit.

The sub-equipment 110a and the sub-equipment 110b may obtain IDs corresponding to semi-finished products in at least some of the plurality of sub-processes, for example, by reading the code objects and transmitting the ID coded by the code object to the controller 120. Thus, the controller 120 may obtain a respective ID, e.g., an electrode ID and/or a cell ID, in a respective sub-process, preferably through the respective sub-equipment 110a, 110b.

According to an example embodiment, the first sub-equipment 110a may obtain an electrode ID corresponding to a unit electrode in the first sub-process. Here, the unit electrode may refer to a structure composed of one electrode and one electrode tab. The first sub-process, for example, may be a notching process for forming an electrode tab on an electrode sheet.

According to an example embodiment, the second sub-equipment 110b may obtain a cell ID corresponding to a semi-finished cell including the unit electrode in the second sub-process. Here, the semi-finished cell may be a semi-finished product manufactured by the second sub-process in the manufacturing process performed by the secondary battery manufacturing system 100. The second sub-process may be a lamination process, a stacking process, a folding process, or a packaging process to be described below. The second sub-process may also include one or more of a lamination process, a stacking process, a folding process, or a packaging process.

According to an example embodiment, if the second sub-process is or includes the lamination process for bonding a unit electrode, on which an electrode tab is formed, and a separator, the semi-finished cell may be a unit cell composed of an electrode (for example, a positive electrode and/or a negative electrode) with at least one polarity and a separator. In this case, the unit cell may be configured as a mono cell in which a positive electrode and a negative electrode are respectively positioned on the outermost sides, a bi-cell in which electrodes of the same polarity are positioned on the outermost sides, or a half cell in which a positive electrode or a negative electrode is positioned between separators on the outermost sides.

According to an example embodiment, the second sub-process may be or include the stacking process. Here, the stacking process may be a general stacking process for stacking a plurality of unit cells or a zigzag stacking (or z-stacking) process for alternately arranging and stacking a unit electrode and a separator. More specifically, the zigzag stacking process may be a process of alternately arranging and stacking a positive electrode and a negative electrode, which correspond to the unit electrode, and a separator in a predetermined order, and for example, alternately arranging may refer to an arrangement in an order of "positive electrode - separator - negative electrode - separator - positive electrode." In this manner, a structure may be formed, in which unit electrodes of the same polarity are spaced apart at regular intervals to face each other and a separator and an electrode of opposite polarity are interposed therebetween. If the second sub-process is the stacking process, the semi-finished cell may be a stack-type electrode assembly formed by stacking the plurality of unit cells or formed by alternately arranging and stacking the unit electrode and the separator.

According to an example embodiment, if the second sub-process is or includes the folding process for folding the plurality of unit cells, the semi-finished cell may be a folding-type electrode assembly formed by folding the plurality of unit cells.

According to an example embodiment, if the second sub-process is the packaging process for packaging the stack-type electrode assembly or the folding-type electrode assembly in a cell case, the semi-finished cell may be a battery cell (for example, a prismatic battery cell or a pouch-type battery cell) having a form in which an electrode assembly is inserted in the cell case (a metal case or a pouch).

According to an example embodiment, the secondary battery manufacturing system 100 may further include a third sub-equipment (not shown) that performs a third sub-process included in the secondary battery manufacturing process. Here, the third sub-process may be performed after the second sub-process is performed. In this case, the second sub-process and the third sub-process may be two processes among the lamination process, the stacking process, the folding process, and the packaging process. For example, if the second sub-process is the lamination process, the third sub-process may be the stacking process, the folding process, or the packaging process. As another example, if the second sub-process is the stacking process or the folding process, the third sub-process may be the packaging process.

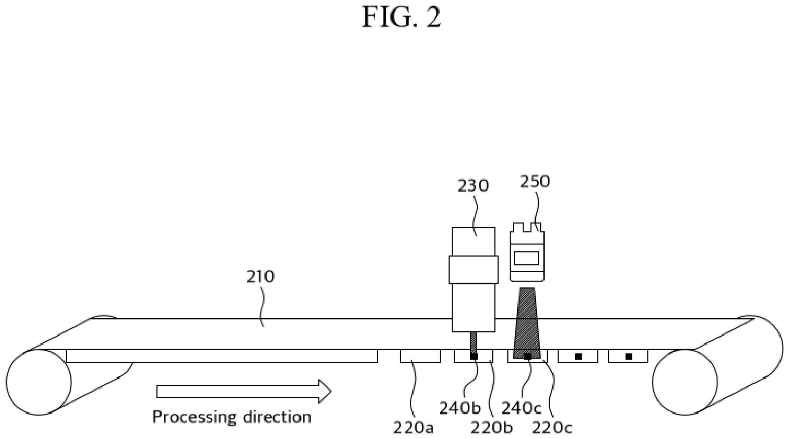

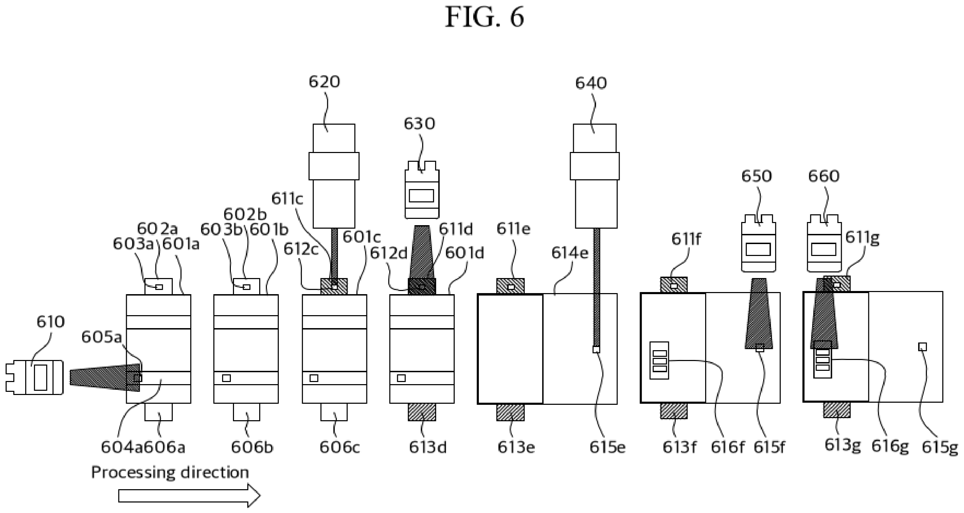

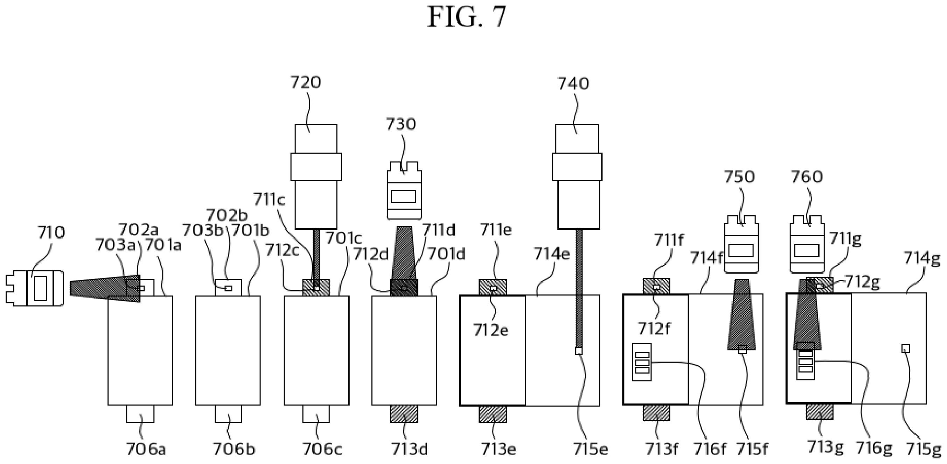

Hereinafter, methods, performed by the secondary battery manufacturing system 100, of obtaining IDs of semi-finished products in a plurality of sub-processes included in the secondary battery manufacturing process are described with reference to FIGS. 2 to 7. The plurality of sub-processes described in FIGS. 2 to 7 may be the notching process, the lamination process, the stacking process, the folding process, and the packaging process included in a stacking/folding-based battery assembly process. Specifically, FIG. 2, FIG. 3, FIG. 4, and FIG. 5 may be diagrams for illustrating the notching process, the lamination process, the stacking process, and the folding process, respectively, and FIGS. 6 and 7 are diagrams for illustrating the packaging process. However, the following description is also applicable to other combinations of sub-processes.

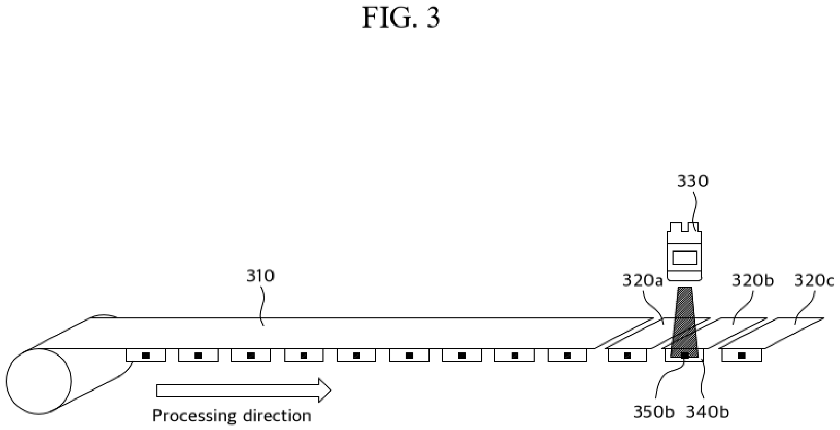

Each sub-process to be described in FIGS. 2 to 7 may be performed by at least one of the first sub-equipment 110a and the second sub-equipment 110b illustrated in FIG. 1. Specifically, the first sub-equipment 110a may perform the notching process of FIG. 2, and the second sub-equipment 110b may perform one of the lamination process, the stacking process, the folding process, and the packaging process of FIGS. 3 to 7.

FIG. 2 is a diagram for illustrating an example in which an electrode ID corresponding to, i.e., for identifying, a unit electrode is obtained in a notching process by a secondary battery manufacturing system according to an example embodiment of the present invention.

Referring to FIG. 2, the first sub-equipment 110a may perform a notching process for forming electrode tabs 220a, 220b, and 220c on an electrode sheet 210. Here, the electrode sheet 210 may be a positive electrode sheet or a negative electrode sheet.

According to an example embodiment, the first sub-equipment 110a may include a plurality of notching processing apparatuses for performing the notching process. The plurality of notching processing apparatuses may include a loading device, a notching device, and an unloading device. Here, the loading device may be configured to unwind and load the electrode sheet 210 from an electrode roll in roll form onto the notching device. The notching device may be configured to shear the electrode sheet 210 using a press or a laser to form the electrode tabs 220a, 220b, and 220c. The unloading device may be configured to wind the electrode sheet 210, on which the electrode tabs 220a, 220b, and 220c are formed, back into the form of the roll. That is, a unit electrode, in this example, is defined as a structure composed of a lengthwise section of the electrode sheet and a tab formed at said lengthwise section.

According to an example embodiment, the first sub-equipment 110a may include a marking device 230 for marking code objects 240b and 240c on the electrode tabs 220a, 220b, and 220c during the notching process, and a reading device 250 for detecting the code objects 240b and 240c formed on the electrode tabs 220a, 220b, and 220c. In this case, since the code objects 240b and 240c may be marked after the electrode tabs 220a, 220b, and 220c are formed on the electrode sheet 210, the marking device 230 may be disposed at a location subsequent to the notching device in a process flow direction on a notching process line. Further, in order to detect the code objects 240b and 240c formed by the marking device 230, the reading device 250 may be disposed at a location subsequent to the marking device 230 in the process flow direction on the notching process line.

According to an example embodiment, the electrode tabs 220a, 220b, and 220c on which the code objects 240b and 240c are formed may be a positive electrode tab or a negative electrode tab. Preferably, in order that tab damage is minimized during marking, the electrode tabs 220a, 220b, and 220c on which the code objects 240b and 240c are formed may be negative electrode tabs. Hereinafter, the present invention is described with a focus on an example embodiment in which the electrode tabs 220a, 220b, and 220c on which the code objects 240b and 240c are formed during the notching process are negative electrode tabs. However, this is for illustrative purposes, and the present invention is not limited thereto in any sense.

According to an example embodiment, the first sub-equipment 110a may obtain an electrode ID corresponding to a unit electrode by detecting the code object 240c formed on the electrode tab 220c using the reading device 250.

According to an example embodiment, the first sub-equipment 110a may be configured to obtain notching process data and notching inspection data.

According to an example embodiment, the notching process data may include at least one of information related to equipment that performs the notching process and the time in which the electrode tab 220c is formed on the electrode sheet 210 through the notching process. The information related to the equipment may include, for example, information on tension applied to the electrode sheet 210 by each equipment, information on the number of punches performed by the notching device, and information on winding performed by the unloading device.

According to an example embodiment, the notching inspection data may include at least one of measurement information obtained by measuring the dimensions of the electrode sheet 210 and the electrode tab 220c in a scanning manner, a vision image obtained by capturing appearances of the electrode sheet 210 and the electrode tab 220c through a vision machine, and state information of the electrode sheet 210 and the electrode tab 220c inspected based on at least one of the measurement information and the vision image.

The measurement information may include the dimensions (for example, thickness and width) of the electrode sheet 210 and the electrode tab 220c, a loading amount of a coating material on the electrode sheet 210, the dimensions (for example, thickness and width) of an insulating material provided on the coating material, the dimensions (for example, thickness and width) of an overlapping section between the coating material and the insulating material, and information on a mismatch between coating lanes on an upper surface of the electrode sheet 210 and coating lanes on a lower surface of the electrode sheet 210.

The state information may include a quality indicator of the electrode sheet 210 and the electrode tab 220c determined based on at least one of the measurement information and the vision image. For example, the state information may include at least one of a quality determined based on the dimensions of the electrode sheet 210 and the electrode tab 220c included in the measurement information and information on a type of defect (for example, a pinhole defect, a crater defect, a line defect, a crack defect, a side ring defect, an island defect, a fold defect, a wrinkle defect, an indentation defect, and a dent defect) of the electrode sheet 210 and the electrode tab 220c determined based on the vision image. The quality indicator may, for example, be a binary indicator that may assume the values "normal" or "discard".

According to an example embodiment, the first sub-equipment 110a may be configured to map the notching process data and/or the notching inspection data to the electrode ID corresponding to the unit electrode including the electrode tab 220c. Here, mapping may represent linking and storing data and an ID, so that the data that serves as a value may be referenced through the ID that serves as a key. In other words, by mapping the notching process data and/or the notching inspection data to the electrode ID, the notching process data and/or the notching inspection data may be referenced through the electrode ID. Accordingly, tracking of the notching process data and/or the notching inspection data of the unit electrode including the electrode tab 220c may be provided based on the electrode ID.

According to an example embodiment, the first sub-equipment 110a may transmit cell tracking data to the controller 120. Here, the cell tracking data may include the electrode ID corresponding to the unit electrode including the electrode tab 220c. In an example embodiment, the cell tracking data may further include the notching process data and/or the notching inspection data of the notching process performed on the unit electrode including the electrode tab 220c. In this case, the cell tracking data may include information on mapping between the electrode ID and the notching process data and/or the notching inspection data. For example, the cell tracking data may include the notching process data and/or the notching inspection data associated or mapped with the electrode ID.

According to an example embodiment, the cell tracking data may include the time in which the electrode ID of the unit electrode including the electrode tab 220c is obtained during the notching process. In an example embodiment, the cell tracking data may further include the time in which the notching process data and/or the notching inspection data is mapped to the electrode ID of the unit electrode including the electrode tab 220c.

FIG. 3 is a diagram for illustrating an example in which a cell ID corresponding to a semi-finished cell is obtained in a lamination process by a secondary battery manufacturing system according to an example embodiment of the present invention.

Referring to FIG. 3, the second sub-equipment 110b may perform a lamination process for forming unit cells 320a, 320b, and 320c by bonding and cutting an electrode sheet 310, on which electrode tabs are formed, and a separator into each unit electrode. Here, the electrode sheet 310 introduced into the lamination process may be an electrode roll in roll form after the notching process of FIG. 2.

According to an example embodiment, the second sub-equipment 110b may include a plurality of lamination processing apparatuses for performing the lamination process. The plurality of lamination processing apparatuses may include a loading device, a laminating device, and a cutting device. Here, the loading device may be configured to unwind and load the electrode sheet 310 from the electrode roll in roll form after the notching process onto the laminating device. Additionally, the loading device may be configured to unwind and load a separator sheet from a separator roll, in addition to the electrode roll, onto the laminating device. In this case, the loading device may be configured to load the electrode sheet 310 and the separator sheet onto the laminating device according to arrangements of an electrode and a separator constituting a unit cell to be manufactured. The laminating device may be configured to bond the electrode sheet 310 and the separator sheet, which are loaded from the loading device. The cutting device may be configured to cut the electrode sheet 310 and the separator sheet, which are bonded, in a predetermined size to form a plurality of unit cells 320a, 320b, and 320c.

According to an example embodiment, the second sub-equipment 110b may include a reading device 330 for detecting, during the lamination process, a code object 350b formed on an electrode tab 340b. For example, the reading device 330 may be disposed at a location subsequent to the cutting device in a process flow direction on a lamination process line.

According to an example embodiment, the second sub-equipment 110b may be configured to obtain a cell ID corresponding to the unit cell 320b by detecting the code object 350b formed on the electrode tab 340b using the reading device 330. The code object 350b read by the reading device 330 may have been marked by the marking device 230 during the notching process of FIG. 2. In other words, when it relates to the same unit electrode, an electrode ID obtained during the notching process and a cell ID obtained during the lamination process may be identical. As the cell ID obtained by reading the code object 350b formed on the electrode tab 340b identifies the unit cell 320b, obtaining the cell ID in the lamination process may include obtaining a unit cell ID. A cell ID of the unit cell, i.e., for identifying or corresponding to the unit cell, therefore, may be a unit cell ID.

According to an example embodiment, the second sub-equipment 110b may be configured to obtain lamination process data and lamination inspection data.

According to an example embodiment, the lamination process data may include at least one of information related to equipment that performs the lamination process and the time in which the unit cell 320b is formed through the lamination process. The information related to the equipment may include, for example, information on the electrode sheet 310 and the separator loaded onto the laminating device by the loading device, information on pressure applied by the laminating device when bonding the electrode sheet 310 and the separator sheet, and information on the number of cuts performed by the cutting device.

According to an example embodiment, the lamination inspection data may include at least one of measurement information obtained by measuring the dimensions of the unit cell 320b in a scanning manner, a vision image obtained by capturing an appearance of the unit cell 320b through a vision machine, short circuit information obtained by inspecting whether the unit cell 320b is short-circuited, and state information of the unit cell 320b.

The state information may include a quality indicator of the unit cell 320b determined based on at least one of the measurement information, the vision image, and the short circuit information. For example, the state information may include at least one of a quality determined based on the dimensions of the unit cell 320b included in the measurement information, a quality determined based on whether the unit cell 320b is internally short-circuited, included in the short circuit information, and information on a type of defect occurring in an upper portion, a lower portion, and the electrode tab 340b of the unit cell 320b, determined based on the vision image. The quality indicator may, for example, be a binary indicator that may assume the values "normal" or "discard".

According to an example embodiment, the second sub-equipment 110b may be configured to map the lamination process data and/or the lamination inspection data to the cell ID corresponding to the unit cell 320b. Accordingly, tracking of the lamination process data and/or the lamination inspection data of the unit cell 320b may be provided based on the cell ID.

According to an example embodiment, the second sub-equipment 110b may transmit cell tracking data to the controller 120. Here, the cell tracking data may include the cell ID corresponding to the unit cell 320b. In an example embodiment, the cell tracking data may further include the lamination process data and/or the lamination inspection data of the lamination process performed on the unit cell 320b. In this case, the cell tracking data may include information on mapping between the cell ID and the lamination process data and/or the lamination inspection data. For example, the cell tracking data may include the lamination process data and/or the lamination inspection data mapped or associated with the cell ID (e.g., the unit cell ID).

According to an example embodiment, the cell tracking data may include the time in which the cell ID of the unit cell 320b is obtained during the lamination process. In an example embodiment, the cell tracking data may further include the time in which the lamination process data and/or the lamination inspection data is mapped to the cell ID of the unit cell 320b.

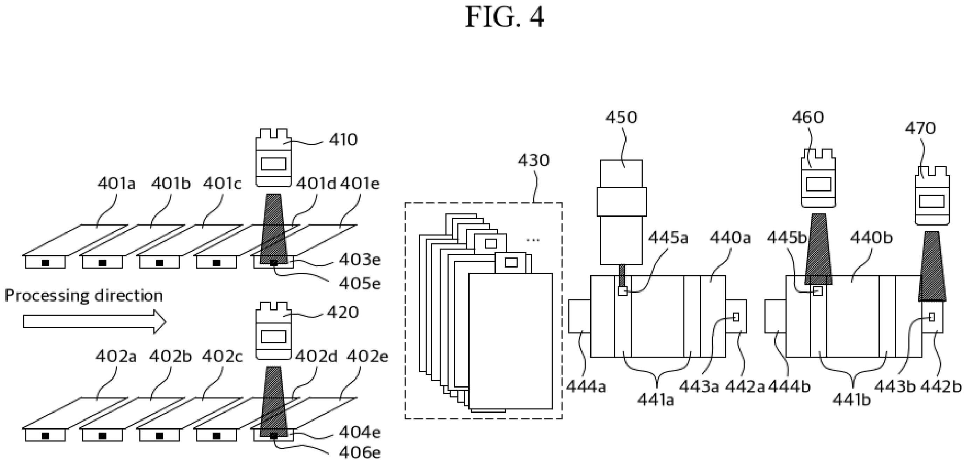

FIG. 4 is a diagram for illustrating an example in which a cell ID corresponding to a semi-finished cell is obtained in a stacking process by a secondary battery manufacturing system according to an example embodiment of the present invention.

Referring to FIG. 4, the second sub-equipment 110b may perform a stacking process for forming stack-type electrode assemblies 440a and 440b by taping a stack cell 430 formed by stacking a plurality of unit cells 401a, 401b, 401c, 401d, 401e, 402a, 402b, 402c, 402d, and 402e through bonding tapes 441a and 441b. Here, the plurality of unit cells 401a, 401b, 401c, 401d, 401e, 402a, 402b, 402c, 402d, and 402e introduced into the stacking process may be unit cells after the lamination process of FIG. 3. According to an example embodiment, the second sub-equipment 110b may include a plurality of stacking processing apparatuses for performing the stacking process. The plurality of stacking processing apparatuses may include a loading device, a stacking device, and a taping device.

Here, the loading device may be configured to load the plurality of unit cells 401a, 401b, 401c, 401d, 401e, 402a, 402b, 402c, 402d, and 402e onto the stacking device. In an example embodiment, the loading device may be configured to load the plurality of unit cells 401a, 401b, 401c, 401d, 401e, 402a, 402b, 402c, 402d, and 402e onto the stacking device using two different process lines. As an example, the loading device may be configured to load a plurality of unit cells 401a, 401b, 401c, 401d, and 401e on a first process line and a plurality of unit cells 402a, 402b, 402c, 402d, and 402e on a second process line separately onto the stacking device. The plurality of unit cells 401a, 401b, 401c, 401d, and 401e on the first process line may be unit cells of a type different from that of the plurality of unit cells 402a, 402b, 402c, 402d, and 402e on the second process line. For example, the plurality of unit cells 401a, 401b, 401c, 401d, and 401e on the first process line may be a mono cell in which a positive electrode and a negative electrode are respectively positioned on the outermost sides, and the plurality of unit cells 402a, 402b, 402c, 402d, and 402e on the second process line may be a half cell in which a positive electrode or a negative electrode is positioned between separators of the outermost sides. In this case, the loading device may be configured to load a first predetermined number (for example, 29) of unit cells among the plurality of unit cells 401a, 401b, 401c, 401d, and 401e on the first process line onto the stacking device and subsequently load a second predetermined number (for example, 1) of unit cells among the plurality of unit cells 402a, 402b, 402c, 402d, and 402e on the second process line onto the stacking device. Here, the sum of the first predetermined number and the second predetermined number may be the number of unit cells constituting the stack cell 430. However, this is for illustrative purposes and the present invention is not limited thereto. For example, the loading device may be configured to sequentially load a predetermined number of unit cells onto the stacking device on a single process line.

If unit cells of a number required for the stack cell 430 are loaded by the loading device, the stacking device may be configured to stack the loaded unit cells to form the stack cell 430. An uppermost unit cell of the stack cell 430 may be, for example, a unit cell loaded from the second process line by the loading device.

The taping device may be configured to tape the stack cell 430 through the bonding tapes 441a and 441b to form the stack-type electrode assemblies 440a and 440b.

According to an example embodiment, the second sub-equipment 110b may include at least one of a first reading device 410 and a second reading device 420 for detecting, during the stacking process, code objects 405e and 406e formed on electrode tabs 403e and 404e of the unit cells 401e and 402e.

The second sub-equipment 110b may be configured to obtain a unit cell ID of each of the plurality of unit cells 401a, 401b, 401c, 401d, 401e, 402a, 402b, 402c, 402d, and 402e before stacking, using at least one of the first reading device 410 and the second reading device 420. According to an example embodiment, the second sub-equipment 110b may be configured to obtain unit cell IDs of unit cells loaded from the first process line among the unit cells constituting the stack cell 430 using the first reading device 410 and obtain a unit cell ID of a unit cell loaded from the second process line using the second reading device 420. The first reading device 410 and the second reading device 420, which are configured for obtaining a unit cell ID of a unit cell before the stack-type electrode assemblies 440a and 440b are formed, may be disposed to detect the code objects of the unit cells before they are input to the stacking device on a stacking process line. For example, the second sub-equipment 110b may obtain a unit cell ID corresponding to or for identifying the unit cell 401e by detecting the code object 405e formed on the electrode tab 403e of the unit cell 401e on the first process line using the first reading device 410 and obtain a unit cell ID corresponding to or for identifying the unit cell 402e by detecting the code object 406e formed on the electrode tab 404e of the unit cell 402e on the second process line using the second reading device 420. In this case, the code objects 404e and 406e read by the first reading device 410 and the second reading device 420 may have been marked by the marking device 230 during the notching process of FIG. 2. In other words, for the same unit electrode, an electrode ID obtained during the notching process, a unit cell ID obtained during the lamination process, and a unit cell ID obtained during the stacking process may be all identical.

According to an example embodiment, the second sub-equipment 110b may include a marking device 450 for marking code objects 445a and 445b on the bonding tapes 441a and 441b during the stacking process and a third reading device 460 for detecting the code objects 445a and 445b formed on the bonding tapes 441a and 441b. For example, the code objects 445a and 445b may be marked after the bonding tapes 441a and 441b are taped on the stack-type electrode assemblies 440a and 440b. In this case, the marking device 450 may be disposed at a location subsequent to the taping device in a process flow direction on the stacking process line. Further, in order to detect the code objects 445a and 445b formed by the marking device 450, the third reading device 460 may be disposed at a location subsequent to the marking device 450 in the process flow direction on the stacking process line.

According to an example embodiment, the second sub-equipment 110b may obtain a cell ID corresponding to or for identifying the stack-type electrode assembly 440b using at least one of the third reading device 460 and a fourth reading device 470. For example, the second sub-equipment 110b may obtain the cell ID corresponding to the stack-type electrode assembly 440b by detecting the code object 445b formed on the bonding tape 441b of the stack-type electrode assembly 440b using the third reading device 460. In this case, the cell ID may be based on or represented by the code object 445b formed on the bonding tape 441b. As another example, the second sub-equipment 110b may obtain the cell ID corresponding to or for identifying the stack-type electrode assembly 440b by detecting a code object 443b formed on, among a plurality of unit cells included in the stack-type electrode assembly 440b , an electrode tab 442b of an outermost unit cell, by using the fourth reading device 470. In this case, the cell ID may be based on the code object 443b formed on the electrode tab 442b of the outermost unit cell, among the plurality of unit cells included in the stack-type electrode assembly 440b. Meanwhile, code objects 443a and 443b detected by the fourth reading device 470 may be formed on, e.g., negative electrode tabs 442a and 442b of outermost unit cells, among a plurality of unit cells included in the stack-type electrode assemblies 440a and 440b. However, this is for illustrative purposes, and the present invention is not limited thereto in any sense. For example, a code object detected by the fourth reading device 470 may be formed on positive electrode tabs 444a and 444b of the outermost unit cells, among the plurality of unit cells included in the stack-type electrode assemblies 440a and 440b.

Generally, as the cell ID obtained by reading the code object formed on the electrode tab of the outermost unit cell or the code object on the bonding tape identifies the electrode cell assembly 440a, b, obtaining the cell ID in the stacking process may include obtaining an electrode assembly ID. A cell ID of the electrode assembly, i.e., for identifying or corresponding to the electrode assembly, therefore, may be an electrode assembly ID.

According to an example embodiment, the second sub-equipment 110b may be configured to match a plurality of unit cell IDs of the plurality of unit cells included in the stack-type electrode assembly 440b obtained using at least one of the first reading device 410 and the second reading device 420 with the cell ID (e.g., the electrode assembly ID) corresponding to the stack-type electrode assembly 440b obtained using at least one of the third reading device 460 and the fourth reading device 470. For example, the second sub-equipment 110b may be configured to load a count whenever the first reading device 410 and/or the second reading device 420 detects a code object and match the plurality of unit cell IDs obtained until a predetermined number of counts are loaded with the cell ID corresponding to the stack-type electrode assembly 440b obtained as the third reading device 460 and/or the fourth reading device 470 detects a code object.

According to an example embodiment, the second sub-equipment 110b may be configured to obtain stacking process data and stacking inspection data.

According to an example embodiment, the stacking process data may include at least one of information related to equipment that performs the stacking process and the time in which the stack-type electrode assembly 440b is formed through the stacking process. The information related to the equipment may include, for example, information on the number of process lines operated by the loading device, information on the number and order of unit cells loaded from each process line, information on the number of unit cells stacked to form the stack cell 430 by the stacking device, and information on specifications of a bonding tape used by the taping device.

According to an example embodiment, the stacking inspection data may include at least one of measurement information obtained by measuring the dimensions of the stack-type electrode assembly 440b and the plurality of unit cells included therein in a scanning manner, a vision image obtained by capturing appearances of the stack-type electrode assembly 440b and the plurality of unit cells included therein through a vision machine, short circuit information obtained by inspecting whether the stack-type electrode assembly 440b is short-circuited, and state information of the stack-type electrode assembly 440b and the plurality of unit cells included therein.

The state information may include a quality indicator of the stack-type electrode assembly 440b determined based on at least one of the measurement information, the vision image, and the short circuit information. For example, the state information may include at least one of a quality determined based on the dimensions of the stack-type electrode assembly 440b and the plurality of unit cells included therein, included in the measurement information, a quality determined based on whether the stack-type electrode assembly 440b is internally short-circuited, included in the short circuit information, and information on an alignment state and a stacked state of the plurality of unit cells, a weight of the stack-type electrode assembly 440b, and a type of defect occurring in an upper portion, a lower portion, a side surface, and the electrode tabs 442b and 444b thereof, determined based on the vision image. The quality indicator may, for example, be a binary indicator that may assume the values "normal" or "discard".

According to an example embodiment, the second sub-equipment 110b may be configured to map the stacking process data and/or the stacking inspection data to the cell ID (e.g., electrode assembly ID) corresponding to the stack-type electrode assembly 440b. Accordingly, tracking of the stacking process data and/or the stacking inspection data of the stack-type electrode assembly 440b may be provided based on the cell ID.

According to an example embodiment, the second sub-equipment 110b may transmit cell tracking data to the controller 120. Here, the cell tracking data may include the cell ID corresponding to the stack-type electrode assembly 440b. In an example embodiment, the cell tracking data may further include the stacking process data and/or the stacking inspection data of the stacking process performed on the stack-type electrode assembly 440b. For example, the cell tracking data may include information on mapping between the cell ID and the stacking process data and/or the stacking inspection data. For example, the cell tracking data may include the stacking process data and/or the stacking inspection data mapped with the cell ID (e.g., the electrode assembly ID).

According to an example embodiment, the cell tracking data may include the time in which the cell ID of the stack-type electrode assembly 440b is obtained during the stacking process. In an example embodiment, the cell tracking data may further include the time in which the stacking process data and/or the stacking inspection data is mapped to the cell ID of the stack-type electrode assembly 440b.

While FIG. 4 illustrates a general stacking process for forming the stack cell 430 by stacking the plurality of unit cells 401a, 401b, 401c, 401d, 401e, 402a, 402b, 402c, 402d, and 402e, the stacking process of the present invention may be zigzag stacking for forming the stack cell 430 by alternately arranging and stacking a unit electrode and a separator. If the second sub-equipment 110b performs a zigzag stacking process, the lamination process described in FIG. 3 may be omitted from the assembly process because the stack cell 430 may be formed with no separate unit cell formed. In this case, a cutting process for cutting a continuous electrode sheet on which an electrode tab is formed into individual unit electrodes may be performed prior to the zigzag stacking process, and each of the unit electrodes cut in the cutting process may be alternately stacked together with a continuously disposed separator to form the stack cell 430. Here, the cutting process may be performed based on an electrode tab position, a shape, and a code object of a unit electrode.

If the second sub-equipment 110b performs the zigzag stacking process, an electrode ID corresponding to each unit electrode may be obtained based on a code object formed on an electrode tab of a unit electrode obtained in the cutting process. According to an example embodiment, the second sub-equipment 110b may obtain the electrode ID corresponding to or for identifying each unit electrode using at least one of the first reading device 410 and the second reading device 420 before stacking and subsequently obtain a cell ID corresponding to or for identifying the stack-type electrode assemblies 440a and 440b using the third reading device 460 and/or the fourth reading device 470 after the stack-type electrode assemblies 440a and 440b are finished by zigzag stacking. The second sub-equipment 110b may be configured to match the cell ID (e.g., electrode assembly ID) with a plurality of electrode IDs corresponding to a plurality of unit electrodes included in the stack-type electrode assemblies 440a and 440b.

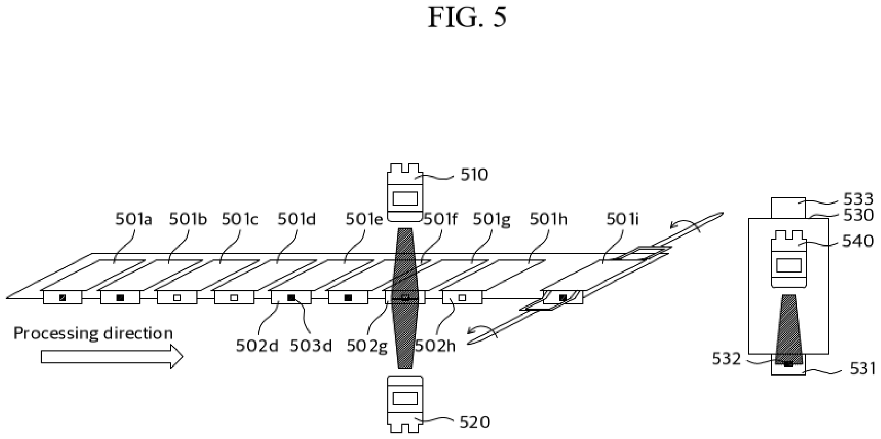

FIG. 5 is a diagram for illustrating an example in which a cell ID corresponding to a semi-finished cell is obtained in a folding process by a secondary battery manufacturing system according to an example embodiment of the present invention.

Referring to FIG. 5, the second sub-equipment 110b may perform a folding process for forming a folding-type electrode assembly 530 by folding a plurality of unit cells 501a, 501b, 501c, 501d, 501e, 501f, 501g, 501h, and 501i. Here, the plurality of unit cells 501a, 501b, 501c, 501d, 501e, 501f, 501g, 501h, and 501i introduced into the folding process may be unit cells after the lamination process of FIG. 3.

According to an example embodiment, the second sub-equipment 110b may include a plurality of folding processing apparatuses for performing the folding process. The plurality of folding processing apparatuses may include a loading device and a folding device.

Here, the loading device may be configured to load the plurality of unit cells 501a, 501b, 501c, 501d, 501e, 501f, 501g, 501h, and 501i onto the folding device. In an example embodiment, the loading device may be configured to load unit cells of two types using one process line onto the folding device. For example, the loading device may be configured to alternately load two of C-type bi-cells 501a, 501b, 501e, 501f, and 501i, in which negative electrodes are positioned on the outermost sides, and two of A-type bi-cells 501c, 501d, 501g, and 501h, in which positive electrodes are positioned on the outermost sides, onto the folding device. However, this is for illustrative purposes and the present invention is not limited thereto. For example, the loading device may be configured to sequentially load unit cells of a single type onto the folding device. The folding device may be configured to fold a predetermined number of unit cells among the plurality of unit cells 501a, 501b, 501c, 501d, 501e, 501f, 501g, 501h, and 501i loaded by the loading device to form the folding-type electrode assembly 530.

According to an example embodiment, the second sub-equipment 110b may include at least one of a first reading device 510 and a second reading device 520 for detecting, during the folding process, a code object 503d formed on an electrode tab 502d of the unit cell 501e.

The second sub-equipment 110b may be configured to obtain a unit cell ID of each of the plurality of unit cells 501a, 501b, 501c, 501d, 501e, 501f, 501g, 501h, and 501i before folding, using at least one of the first reading device 510 and the second reading device 520. A code object formed on an electrode tab of a unit cell on a folding process line may be disposed at different positions depending on the type of unit cell. For example, the code object may be formed at an upper portion of an electrode tab in the C-type bi-cells 501a, 501b, 501e, 501f, and 501i, and the code object may be formed at a lower portion of an electrode tab in the A-type bi-cells 501c, 501d, 501g, and 501h. Accordingly, the first reading device 510 and the second reading device 520 may be disposed to detect an upper portion and a lower portion, respectively, of an electrode tab. Specifically, the first reading device 510, which is disposed to detect an upper portion of an electrode tab, may be configured to detect the code object 503d formed at an upper portion of the electrode tab 502d of the C-type bi-cell 501e. The second reading device 520, which is disposed to detect a lower portion of an electrode tab, may be configured to detect a code object (not shown) formed at a lower portion of an electrode tab 502g of the A-type bi-cell 501g.

In this case, the code object 503d read by the first reading device 510 and the second reading device 520 may have been marked by the marking device 230 during the notching process of FIG. 2. In other words, based on the same unit electrode, an electrode ID obtained during the notching process, a unit cell ID obtained during the lamination process, and a unit cell ID obtained during the folding process may be all identical.

The first reading device 510 and the second reading device 520, which are configured for obtaining a unit cell ID of a unit cell before the folding-type electrode assembly 530 is formed, may be disposed before the folding device on the folding process line.

According to an example embodiment, the sub-equipment 110b may include a third reading device 540 for detecting a code object 532 formed on an electrode tab 531 of an outermost unit cell among a plurality of unit cells included in the folding-type electrode assembly 530 during the folding process. The sub-equipment 110b may obtain a cell ID corresponding to or identifying the folding-type electrode assembly 530 by detecting the code object 532 formed on the electrode tab 531 of the outermost unit cell among the plurality of unit cells included in the folding-type electrode assembly 530 using the third reading device 540. In this case, the cell ID may be based on the code object 532 formed on the electrode tab 531 of the outermost unit cell among the plurality of unit cells included in the folding-type electrode assembly 530. Meanwhile, the code object 532 detected by the third reading device 540 may be formed on a negative electrode tab 531 of the outermost unit cell among the plurality of unit cells included in the folding-type electrode assembly 530. However, this is for illustrative purposes, and the present invention is not limited thereto in any sense. For example, a code object detected by the third reading device 540 may be formed on a positive electrode tab 533 of the outermost unit cell among the plurality of unit cells included in the folding-type electrode assembly 530. As the cell ID obtained by reading the code object formed on the electrode tab of the outermost unit cell of the folding-type electrode assembly identifies an electrode assembly, obtaining the cell ID in the folding process may include obtaining an electrode assembly ID. A cell ID of the folding-type electrode assembly, i.e., for identifying or corresponding to the folding-type electrode assembly, therefore, may be an electrode assembly ID.

According to an example embodiment, the second sub-equipment 110b may be configured to match a plurality of unit cell IDs of the plurality of unit cells included in the folding-type electrode assembly 530 obtained using at least one of the first reading device 510 and the second reading device 520 with the cell ID (electrode assembly ID) corresponding to or for identifying the folding-type electrode assembly 530 obtained using the third reading device 540. For example, the second sub-equipment 110b may be configured to load a count whenever the first reading device 510 and/or the second reading device 520 detects a code object and match the plurality of unit cell IDs obtained until a predetermined number of counts are loaded with the cell ID corresponding to the folding-type electrode assembly 530 obtained as the third reading device 540 detects the code object 532.

According to an example embodiment, the second sub-equipment 110b may be configured to obtain folding process data and folding inspection data.

According to an example embodiment, the folding process data may include at least one of information related to equipment that performs the folding process and the time in which the folding-type electrode assembly 530 is formed through the folding process. The information related to the equipment may include, for example, information on a type of unit cells loaded onto the folding device by the loading device and information on the number of unit cells folded to form the folding-type electrode assembly 530 by the folding device.

According to an example embodiment, the folding inspection data may include at least one of measurement information obtained by measuring the dimensions of the folding-type electrode assembly 530 and the plurality of unit cells included therein in a scanning manner, a vision image obtained by capturing appearances of the folding-type electrode assembly 530 and the plurality of unit cells included therein through a vision machine, short circuit information obtained by inspecting whether the folding-type electrode assembly 530 is short-circuited, and state information of the folding-type electrode assembly 530 and the plurality of unit cells included therein.

The state information may include a quality indicator of the folding-type electrode assembly 530 determined based on at least one of the measurement information, the vision image, and the short circuit information. For example, the state information may include at least one of a quality determined based on the dimensions of the folding-type electrode assembly 530 and the plurality of unit cells included therein, included in the measurement information, a quality determined based on whether the folding-type electrode assembly 530 is internally short-circuited, included in the short circuit information, and information on an alignment state and a folding state of the plurality of unit cells, a weight of the folding-type electrode assembly 530, and a type of defect occurring in an upper portion, a lower portion, a side surface, and the electrode tabs 531 and 533 thereof, determined based on the vision image. The quality indicator may, for example, be a binary indicator that may assume the values "normal" or "discard".

According to an example embodiment, the second sub-equipment 110b may be configured to map the folding process data and/or the folding inspection data to the cell ID corresponding to the folding-type electrode assembly 530. Accordingly, tracking of the folding process data and/or the folding inspection data of the folding-type electrode assembly 530 may be provided based on the cell ID.

According to an example embodiment, the second sub-equipment 110b may transmit cell tracking data to the controller 120. Here, the cell tracking data may include the cell ID corresponding to or for identifying the folding-type electrode assembly 530. In an example embodiment, the cell tracking data may further include the folding process data and/or the folding inspection data of the folding process performed on the folding-type electrode assembly 530. In this case, the cell tracking data may include information on mapping between the cell ID and the folding process data and/or the folding inspection data. For example, the cell tracking data may include the folding process data and/or the folding inspection data mapped with the cell ID (e.g., the electrode assembly ID).

According to an example embodiment, the cell tracking data may include the time in which the cell ID of the folding-type electrode assembly 530 is obtained during the folding process. In an example embodiment, the cell tracking data may further include the time in which the folding process data and/or the folding inspection data is mapped to the cell ID of the folding-type electrode assembly 530.

FIG. 6 is a diagram for illustrating an example in which a cell ID corresponding to a semi-finished cell is obtained based on a packaging process for a stack-type electrode assembly by a secondary battery manufacturing system according to an example embodiment of the present invention.

Referring to FIG. 6, the second sub-equipment 110b may perform a packaging process for forming battery cells 614e (for example, a prismatic battery cell or a pouch-type battery cell) by packaging stack-type electrode assemblies 601a, 601b, 601c, and 601d in a cell case (for example, a metal case or a pouch). Here, the stack-type electrode assemblies 601a, 601b, 601c, and 601d introduced into the packaging process may be an electrode assembly after the stacking process of FIG. 4.

According to an example embodiment, the second sub-equipment 110b may include a plurality of packaging processing apparatuses for performing the packaging process. The plurality of packaging processing apparatuses may include a lead welding device and a packaging device. Here, the lead welding device may include a negative electrode lead welding device for welding negative electrode leads 611c, 611d, 611e, 611f, and 611g to negative electrode tabs 602a and 602b of the stack-type electrode assemblies 601a, 601b, 601c, and 601d and a positive electrode lead welding device for welding positive electrode leads 613d, 613e, 613f, and 613g to positive electrode tabs 606a, 606b, and 606c of the stack-type electrode assemblies 601a, 601b, 601c, and 601d. The packaging device may be configured to package the stack-type electrode assembly 601d, to which the negative electrode leads 611c, 611d, 611e, 611f, and 611g and the positive electrode leads 613d, 613e, 613f, and 613g are welded, in the cell case to form the battery cells 614e, 614f, and 614g.

According to an example embodiment, the second sub-equipment 110b may include a first reading device 610 for detecting a code object 603a or 605a formed on the stack-type electrode assembly 601a during the packaging process. The second sub-equipment 110b may be configured to obtain an electrode assembly ID of the stack-type electrode assembly 601a using the first reading device 610. The code object detected by the first reading device 610 may be identical to a code object used to obtain an electrode assembly ID of the stack-type electrode assembly 601a during the stacking process of FIG. 4. For example, if the electrode assembly ID is obtained by detecting, during the stacking process, the code object 603a formed on the negative electrode tab 602a of the stack-type electrode assembly 601a, the first reading device 610 may be configured to obtain the electrode assembly ID by detecting the code object 603a formed on the negative electrode tab 602a of the stack-type electrode assembly 601a. In this case, the first reading device 610 may be disposed to detect the code object before the electrode assembly 601a is processed by the negative electrode lead welding device on a packaging process line. As another example, if the electrode assembly ID is obtained by detecting, during the stacking process, the code object 605a formed on a bonding tape 604a of the stack-type electrode assembly 601a, the first reading device 610 may be configured to obtain the electrode assembly ID by detecting the code object 605a formed on the bonding tape 604a of the stack-type electrode assembly 601a. In this case, the first reading device 610 may be disposed to detect the code object before the electrode assembly 601a is processed by the packaging device on the packaging process line.

According to an example embodiment, the second sub-equipment 110b may include a first marking device 620 for marking a code object 612c on the negative electrode lead 611c during the packaging process and a second reading device 630 for detecting a code object 612d formed on the negative electrode lead 611d. In this case, since the code objects 612c and 612d may be marked after the negative electrode leads 611c and 611d are welded to the stack-type electrode assemblies 601c and 601d, the first marking device 620 may be disposed at a location subsequent to the negative electrode lead welding device in a process flow direction on the packaging process line. Further, in order to detect the code objects 612c and 612d formed by the first marking device 620, the second reading device 630 may be disposed at a location subsequent to the first marking device 620 in the process flow direction on the packaging process line.

According to an example embodiment, the second sub-equipment 110b may include a second marking device 640 for marking code objects 615e, 615f, 615g, 616f, and 616g on the battery cells 614e, 614f, and 614g during the packaging process. The second marking device 640 may be configured to mark at least one of a first code object 615e, 615f, or 615g and a second code object 616f or 616g on the battery cells 614e, 614f, and 614g. Here, the first code objects 615e, 615f, and 615g may be formed on a void portion to be removed later from a finished product, and the second code objects 616f and 616g may be formed on a case portion.

According to an example embodiment, the second sub-equipment 110b may include at least one of a third reading device 650 for detecting the code objects 615e, 615f, and 615g formed on the battery cells 614e, 614f, and 614g and a fourth reading device 660 for detecting the code objects 616f and 616g formed on the battery cells 614f and 614g.

According to an example embodiment, the second sub-equipment 110b may obtain a cell ID corresponding to or for identifying a battery cell using at least one of the second reading device 620, the third reading device 650, and the fourth reading device 660. For example, the second sub-equipment 110b may obtain cell IDs corresponding to battery cells by detecting the code objects 612c and 612d formed on the negative electrode leads 611c and 611d using the second reading device 620. In this case, the cell IDs may be based on or represented or coded by the code objects 612c and 612d. As another example, the second sub-equipment 110b may obtain cell IDs corresponding to the battery cells 614e, 614f, and 614g by detecting the code objects 615e, 615f, and 615g formed on the void portions of the battery cells 614e, 614f, and 614g using the third reading device 650. In this case, the cell IDs may be based on or represented or coded by the code objects 615e, 615f, and 615g. As another example, the second sub-equipment 110b may obtain cell IDs corresponding to the battery cells 614f and 614g by detecting the code objects 616f and 616g formed on the case portions of the battery cells 614f and 614g using the fourth reading device 660. In this case, the cell IDs may be based on the code objects 616f and 616g.

According to an example embodiment, the second sub-equipment 110b may be configured to match electrode assembly IDs of the stack-type electrode assemblies 601a, 601b, 601c, and 601d obtained using the first reading device 610 with the cell ID corresponding to the battery cell obtained using at least one of the second reading device 630, the third reading device 650, and the fourth reading device 660. That is, as the cell ID obtained by using at least one of the second reading device 630, the third reading device 650, and the fourth reading device 660 identifies the battery cell, obtaining the cell ID during the packaging process may include obtaining a battery cell ID by detecting a code object formed on the battery cell. In other words, the cell ID identifying a respective battery cell may be a battery cell ID.

According to an example embodiment, the second sub-equipment 110b may be configured to obtain packaging process data and packaging inspection data of the battery cell 614g.

According to an example embodiment, the packaging process data may include at least one of information related to equipment that performs the packaging process and the time in which the battery cell 614g is formed through the packaging process. The information related to the equipment may include, for example, welding information related to output energy, welding time, a welding position, and the number of welds of the lead welding device and packaging information related to packaging temperature and pressure of the packaging device.

According to an example embodiment, the packaging inspection data may include at least one of measurement information obtained by measuring the battery cell 614g in a scanning manner, a vision image obtained by capturing an appearance of the battery cell 614g through a vision machine, welding inspection information obtained by inspecting a welding state of the battery cell 614g, short circuit information obtained by inspecting whether the battery cell 614g is short-circuited, resistance information obtained by inspecting insulation resistance of the battery cell 614g, and state information of the battery cell 614g.

The state information may include a quality indicator of the battery cell 614g determined based on at least one of the measurement information, the vision image, the welding inspection information, the short circuit information, and the resistance information. For example, the state information may include at least one of a quality determined based on the dimensions of the battery cell 614g included in the measurement information, a quality determined based on the welding state of the battery cell 614g included in the welding inspection information, a quality determined based on the insulation resistance of the battery cell 614g included in the resistance information, and information on a state of the leads 611g and 613g of the battery cell 614g, a weight of the battery cell 614g, and a type of defect occurring in an upper portion, a lower portion, and a side surface thereof, determined based on the vision image. The quality indicator may, for example, be a binary indicator that may assume the values "normal" or "discard".

According to an example embodiment, the second sub-equipment 110b may be configured to map the packaging process data and/or the packaging inspection data to the cell ID corresponding to the battery cell 614g. Accordingly, tracking of the packaging process data and/or the packaging inspection data of the battery cell 614g may be provided based on the cell ID.

According to an example embodiment, the second sub-equipment 110b may transmit cell tracking data to the controller 120. Here, the cell tracking data may include the cell ID corresponding to the battery cell 614g. In an example embodiment, the cell tracking data may further include the packaging process data and/or the packaging inspection data of the packaging process performed on the battery cell 614g. In this case, the cell tracking data may include information on mapping between the cell ID and the packaging process data and/or the packaging inspection data. For example, the cell tracking data may include the packaging process data and/or the packaging inspection data mapped with the cell ID.

According to an example embodiment, the cell tracking data may include the time in which the cell ID of the battery cell 614g is obtained during the packaging process. In an example embodiment, the cell tracking data may further include the time in which the packaging process data and/or the packaging inspection data is mapped to the cell ID of the battery cell 614g.

FIG. 7 is a diagram for illustrating an example in which a cell ID corresponding to or for identifying a semi-finished cell is obtained based on a packaging process for a folding-type electrode assembly by a secondary battery manufacturing system according to an example embodiment of the present invention.

Referring to FIG. 7, the second sub-equipment 110b may perform a packaging process for forming battery cells 714e, 714f, and 714g (for example, a prismatic battery cell or a pouch-type battery cell) by packaging folding-type electrode assemblies 701a, 701b, 701c, and 701d in a cell case (for example, a metal case or a pouch). Here, the folding-type electrode assemblies 701a, 701b, 701c, and 701d introduced into the packaging process may be an electrode assembly after the folding process of FIG. 5.

According to an example embodiment, the second sub-equipment 110b may include a plurality of packaging processing apparatuses for performing the packaging process. The plurality of packaging processing apparatuses may include a lead welding device and a packaging device. Here, the lead welding device may include a negative electrode lead welding device for welding negative electrode leads 711c, 711d, 711e, 711f, and 711g to negative electrode tabs 702a and 702b of the folding-type electrode assemblies 701a, 701b, 701c, and 701d and a positive electrode lead welding device for welding positive electrode leads 713d, 713e, 713f, and 713g to positive electrode tabs 706a, 706b, and 706c of the folding-type electrode assemblies 701a, 701b, 701c, and 701d. The packaging device may be configured to package the folding-type electrode assemblies 701a, 701b, 701c, and 701d, to which the negative electrode leads 711c, 711d, 711e, 711f, and 711g and the positive electrode leads 713d, 713e, 713f, and 713g are welded, in the cell case to form the battery cells 714e, 714f, and 714g.

According to an example embodiment, the second sub-equipment 110b may include a first reading device 710 for detecting code objects 703a and 703b formed on the negative electrode tabs 702a and 702b of the folding-type electrode assemblies 701a and 701b during the packaging process. The second sub-equipment 110b may be configured to obtain electrode assembly IDs of the folding-type electrode assemblies 701a and 701b using the first reading device 710. In this case, the first reading device 710 may be disposed to detect the code objects before the electrode assemblies are processed by the negative electrode lead welding device on a packaging process line.

According to an example embodiment, the second sub-equipment 110b may include a first marking device 720 for marking a code object 712c on the negative electrode lead 711c during the packaging process and a second reading device 730 for detecting a code object 712d formed on the negative electrode lead 711d. In this case, since the code objects 712c and 712d may be marked after the negative electrode leads 711c and 711d are welded to the folding-type electrode assemblies 701c and 701d, the first marking device 720 may be disposed at a location subsequent to the negative electrode lead welding device in a process flow direction on the packaging process line. Further, in order to detect the code objects 712c and 712d formed by the first marking device 720, the second reading device 730 may be disposed at a location subsequent to the first marking device 720 in the process flow direction on the packaging process line.

According to an example embodiment, the second sub-equipment 110b may include a second marking device 740 for marking code objects 715e, 715f, 715g, 716f, and 716g on the battery cells 714e, 714f, and 714g during the packaging process. The second marking device 740 may be configured to mark at least one of a code object 715e, 715f, or 715g and a code object 716f or 716g on the battery cells 714e, 714f, and 714g. Here, the code objects 715e, 715f, and 715g may be formed on a void portion to be removed later from a finished product, and the code objects 716f and 716g may be formed on a case portion.

According to an example embodiment, the second sub-equipment 110b may include at least one of a third reading device 750 for detecting the code objects 715e, 715f, and 715g formed on the battery cells 714e, 714f, and 714g and a fourth reading device 760 for detecting the code objects 716f and 716g formed on the battery cells 714f and 714g.

According to an example embodiment, the second sub-equipment 110b may obtain a cell ID corresponding to or for identifying a battery cell using at least one of the second reading device 720, the third reading device 750, and the fourth reading device 760. For example, the second sub-equipment 110b may obtain cell IDs corresponding to or for identifying battery cells by detecting the code objects 712c and 712d formed on the negative electrode leads 711c and 711d using the second reading device 720. In this case, the cell IDs may be based on the code objects 712c and 712d. As another example, the second sub-equipment 110b may obtain cell IDs corresponding to or for identifying the battery cells 714e, 714f, and 714g by detecting the code objects 715e, 715f, and 715g formed on the void portions of the battery cells 714e, 714f, and 714g using the third reading device 750. In this case, the cell IDs may be based on or represented or coded by the code objects 715e, 715f, and 715g. As another example, the second sub-equipment 110b may obtain cell IDs corresponding to or for identifying the battery cells 714f and 714g by detecting the code objects 716f and 716g formed on the case portions of the battery cells 714f and 714g using the fourth reading device 760. In this case, the cell IDs may be based on the code objects 716f and 716g.

According to an example embodiment, the second sub-equipment 110b may be configured to match electrode assembly IDs of the folding-type electrode assemblies 701a, 701b, 701c, and 701d obtained using the first reading device 710 with the cell ID corresponding to the battery cell obtained using at least one of the second reading device 730, the third reading device 750, and the fourth reading device 760. That is, as the cell ID obtained during the packaging process identifies the battery cell, obtaining the cell ID during the packaging process may include obtaining a battery cell ID by detecting a code object formed on the battery cell. In other words, the cell ID identifying a respective battery cell may be a battery cell ID.

According to an example embodiment, the second sub-equipment 110b may be configured to obtain packaging process data and packaging inspection data of the battery cell 714g.

According to an example embodiment, the packaging process data may include at least one of information related to equipment that performs the packaging process and the time in which the battery cell 714g is formed through the packaging process. The information related to the equipment may include, for example, welding information related to output energy, welding time, a welding position, and the number of welds of the lead welding device and packaging information related to packaging temperature and pressure of the packaging device.

According to an example embodiment, the packaging inspection data may include at least one of measurement information obtained by measuring the battery cell 714g in a scanning manner, a vision image obtained by capturing an appearance of the battery cell 714g through a vision machine, welding inspection information obtained by inspecting a welding state of the battery cell 714g, short circuit information obtained by inspecting whether the battery cell 714g is short-circuited, resistance information obtained by inspecting insulation resistance of the battery cell 714g, and state information of the battery cell 714g.

The state information may include a quality indicator of the battery cell 714g determined based on at least one of the measurement information, the vision image, the welding inspection information, the short circuit information, and the resistance information. For example, the state information may include at least one of a quality determined based on the dimensions of the battery cell 714g included in the measurement information, a quality determined based on the welding state of the battery cell 714g included in the welding inspection information, a quality determined based on the insulation resistance of the battery cell 714g included in the resistance information, and information on a state of the leads 711g and 713g of the battery cell 714g, a weight of the battery cell 714g, and a type of defect occurring in an upper portion, a lower portion, and a side surface thereof, determined based on the vision image. The quality indicator may, for example, be a binary indicator that may assume the values "normal" or "discard".

According to an example embodiment, the second sub-equipment 110b may be configured to map the packaging process data and/or the packaging inspection data to the cell ID corresponding to or for identifying the battery cell 714g. Accordingly, tracking of the packaging process data and/or the packaging inspection data of the battery cell 714g may be provided based on the cell ID (e.g., battery cell ID).

According to an example embodiment, the second sub-equipment 110b may transmit cell tracking data to the controller 120. Here, the cell tracking data may include the cell ID corresponding to or for identifying the battery cell 714g. In an example embodiment, the cell tracking data may further include the packaging process data and/or the packaging inspection data of the packaging process performed on the battery cell 714g. In this case, the cell tracking data may include information on mapping between the cell ID and the packaging process data and/or the packaging inspection data. For example, the cell tracking data may include the packaging process data and/or the packaging inspection data mapped with the cell ID (battery cell ID).

According to an example embodiment, the cell tracking data may include the time in which the cell ID of the battery cell 714g is obtained during the packaging process. In an example embodiment, the cell tracking data may further include the time in which the packaging process data and/or the packaging inspection data is mapped to the cell ID of the battery cell 714g.

Referring back to FIG. 1, the controller 120 may process cell tracking data obtained from the first sub-equipment 110a and the second sub-equipment 110b.

According to an example embodiment, the controller 120 may be implemented as a programmable logic controller (PLC). The PLC may be a special form of microprocessor-based controller that stores instructions using a programmable memory and controls a machine and a process by implementing a function such as logic, sequencing, timing, counting, and arithmetic.

According to an example embodiment, the controller 120 may include a power supply, a CPU, an input interface, an output interface, a communication circuit, and memory devices. The power supply may be configured to supply power to other elements of the controller 120, such as the CPU, the input interface, the output interface, the communication circuit, and the memory devices, to operate the controller 120. The memory devices may include a read-only memory (ROM) configured to store a system program such as an operating system and a random-access memory (RAM) configured to store a user program and data, such as state information of input and output devices and values of a timer, a counter, and other internal devices. The CPU may be configured to control communication between modules for implementing logic and converting input signals into output operation signals. The CPU may operate based on the system program and the user program stored in the memory devices. The CPU may be configured to write or read process data and inspection data to or from data areas of the memory devices based on the system program and the user program. A condition or data of an industrial apparatus and a production process may be transmitted to the CPU through an input module. A result processed by the CPU may be transmitted to an actuator through an output module. The communication circuit may be configured to establish a wired communication channel and/or a wireless communication channel between the controller 120 and the sub-equipment 110a and the sub-equipment 110b or an external device and to transmit and receive data to and from the sub-equipment 110a and the sub-equipment 110b or the external device through an established communication channel.

However, the controller 120 is not limited thereto and may include one of a simple controller, a microprocessor, a complex processor such as a CPU and a graphic processing unit (GPU), a processor configured by software, dedicated hardware, and firmware. For example, the controller 120 may be implemented by a general-purpose computer or application-specific hardware such as a digital signal processor (DSP), a field programmable gate array (FPGA), and an application-specific integrated circuit (ASIC).

The controller 120 may be configured to obtain cell tracking data from the sub-equipment 110a and the sub-equipment 110b.

According to an example embodiment, the cell tracking data may include IDs of semi-finished products obtained by the sub-equipment 110a and the sub-equipment 110b. The controller 120 may obtain an electrode ID corresponding to a unit electrode from the first sub-equipment 110a. The controller 120 may obtain a cell ID corresponding to a semi-finished cell including the unit electrode from the second sub-equipment 110b. As an example, if the second sub-process is or includes a lamination process, the controller 120 may obtain a cell ID (unit cell ID) corresponding to or for identifying a unit cell including the unit electrode from the second sub-equipment 110b. As an example, if the second sub-process is or includes a stacking process or a folding process, the controller 120 may obtain a cell ID (electrode assembly ID) corresponding to or for identifying an electrode assembly composed of a plurality of unit cells including the unit electrode from the second sub-equipment 110b. As an example, if the second sub-process is or includes a packaging process, the controller 120 may obtain a cell ID (battery cell ID) corresponding to or for identifying a battery cell including the unit electrode from the second sub-equipment 110b.

According to an example embodiment, the cell tracking data may include process data and/or inspection data of the semi-finished products obtained by the sub-equipment 110a and the sub-equipment 110b. The cell tracking data obtained from the first sub-equipment 110a may include notching process data and/or notching inspection data corresponding to the unit electrode. The cell tracking data obtained from the second sub-equipment 110b may include process data and/or inspection data corresponding to the semi-finished cell. As an example, if the second sub-process is the lamination process, the cell tracking data obtained from the second sub-equipment 110b may include lamination process data and/or lamination inspection data corresponding to the unit cell. As an example, if the second sub-process is the stacking process, the cell tracking data obtained from the second sub-equipment 110b may include stacking process data and/or stacking inspection data corresponding to a stack-type electrode assembly. As an example, if the second sub-process is the folding process, the cell tracking data obtained from the second sub-equipment 110b may include folding process data and/or folding inspection data corresponding to a folding-type electrode assembly. As an example, if the second sub-process is the packaging process, the cell tracking data obtained from the second sub-equipment 110b may include packaging process data and/or packaging inspection data corresponding to the battery cell.

The controller 120 may be configured to match an electrode ID obtained from the first sub-equipment 110a and a cell ID obtained from the second sub-equipment 110b. Hereinafter, a method, performed by the controller 120, of matching the electrode ID and the cell ID is described for each example embodiment in which the second sub-process is the lamination process, the stacking process, the folding process, or the packaging process. Meanwhile, a case in which the first sub-process is a notching process is described as an example.

According to an example embodiment, the controller 120 may be configured to obtain a cell ID (e.g., unit cell ID) identifying a unit cell including a unit electrode from the second sub-equipment 110b that performs the lamination process. Here, the cell ID, which is obtained by the reading device 330 of FIG. 3 by detecting a code object formed on an electrode tab of the unit cell, may be identical to the electrode ID. The controller 120 may be configured to match the electrode ID and the cell ID (e.g., unit cell ID), which are identical. Accordingly, tracking of notching process data and/or notching inspection data mapped to the electrode ID and lamination process data and/or lamination inspection data mapped to the cell ID may be provided based on at least one of the electrode ID and the cell ID.

According to an example embodiment, the controller 120 may be configured to obtain a cell ID (e.g., electrode assembly ID) corresponding to a stack-type electrode assembly including a plurality of unit cells from the second sub-equipment 110b that performs the stacking process. Here, the cell ID may be obtained by at least one of the third reading device 460 and the fourth reading device 470 of FIG. 4. The controller 120 may be further configured to obtain matching between the cell ID (e.g., electrode assembly ID) and a plurality of unit cell IDs of the plurality of unit cells included in the stack-type electrode assembly from the second sub-equipment 110b. Here, the plurality of unit cell IDs may be obtained by at least one of the first reading device 410 and the second reading device 420 of FIG. 4. The controller 120 may be configured to match the cell ID (e.g., electrode assembly ID) with the electrode ID via a unit cell ID of a unit cell including a unit electrode among the plurality of unit cell IDs matched with the cell ID. Accordingly, tracking of notching process data and/or notching inspection data mapped to the electrode ID and stacking process data and/or stacking inspection data mapped to the cell ID may be provided based on at least one of the electrode ID and the cell ID.

According to an example embodiment, the controller 120 may be configured to obtain a cell ID (e.g., electrode assembly ID) corresponding to a folding-type electrode assembly including a plurality of unit cells from the second sub-equipment 110b that performs the folding process. Here, the cell ID may be obtained by the third reading device 540 of FIG. 5. The controller 120 may be further configured to obtain matching between the cell ID (e.g., electrode assembly ID) and a plurality of unit cell IDs of the plurality of unit cells included in the folding-type electrode assembly from the second sub-equipment 110b. Here, the plurality of unit cell IDs may be obtained by at least one of the first reading device 510 and the second reading device 520 of FIG. 5. The controller 120 may be configured to match the cell ID (e.g., electrode assembly ID) with the electrode ID via a unit cell ID of a unit cell including a unit electrode among the plurality of unit cell IDs matched with the cell ID. Accordingly, tracking of notching process data and/or notching inspection data mapped to the electrode ID and folding process data and/or folding inspection data mapped to the cell ID may be provided based on at least one of the electrode ID and the cell ID.

According to an example embodiment, the controller 120 may be configured to obtain a cell ID (e.g., battery cell ID) corresponding to a battery cell where an electrode assembly is packaged in a cell case from the second sub-equipment 110b that performs the packaging process. Here, the cell ID may be obtained by at least one of the second reading device 630 (or 730), the third reading device 650 (or 750), and the fourth reading device 660 (or 760) of FIG. 6 (or FIG. 7). The controller 120 may be further configured to obtain matching between the cell ID (e.g., battery cell ID) and an electrode assembly ID corresponding to the electrode assembly constituting the battery cell. Here, the electrode assembly ID may be obtained by the first reading device 610 (or 710) of FIG. 6 (or FIG. 7). Furthermore, the controller 120 may be configured to match the electrode assembly ID with the electrode ID based on cell tracking data obtained from a sub-equipment that previously performs the stacking process or the folding process. The controller 120 may be configured to match the cell ID (e.g., battery cell ID) with the electrode ID via the electrode assembly ID. Accordingly, tracking of notching process data and/or notching inspection data mapped to the electrode ID and packaging process data and/or packaging inspection data mapped to the cell ID may be provided based on at least one of the electrode ID and the cell ID.

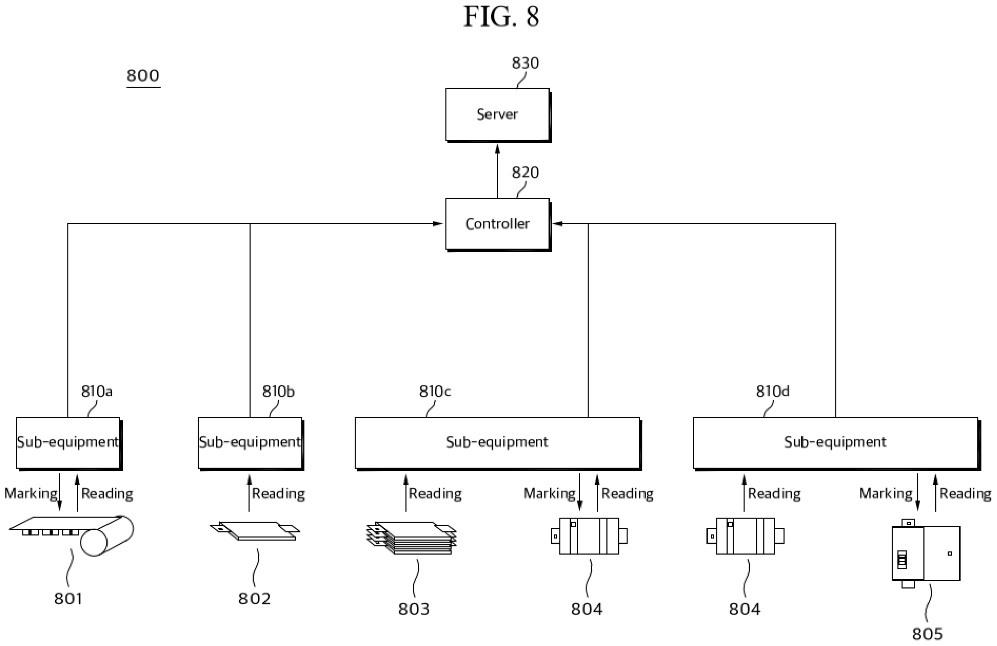

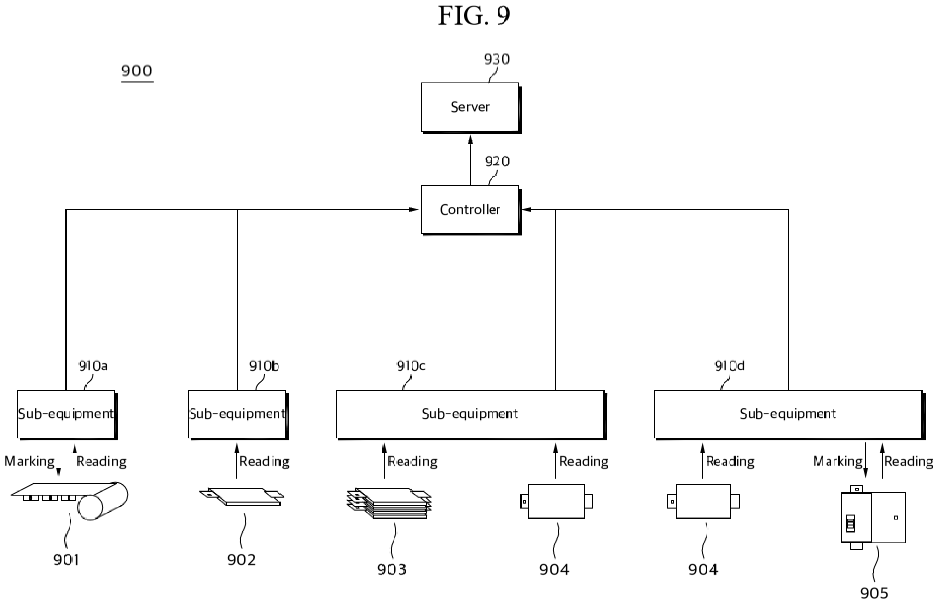

Hereinafter, a method of obtaining cell tracking data from a plurality of pieces of sub-equipment that perform a plurality of sub-processes included in a secondary battery assembly process based on a process sequence and matching IDs of semi-finished products is described with reference to FIGS. 8 and 9. Specifically, a secondary battery assembly process including a notching process, a lamination process, a stacking process, and a packaging process is described with reference to FIG. 8, and a secondary battery assembly process including a notching process, a lamination process, a folding process, and a packaging process is described with reference to FIG. 9.

FIG. 8 is a block diagram of a secondary battery manufacturing system for illustrating a method of tracking a cell according to an example embodiment of the present invention.

Referring to FIG. 8, a secondary battery manufacturing system 800 may include a first sub-equipment 810a that performs a notching process, a second sub-equipment 810b that performs a lamination process, a third sub-equipment 810c that performs a stacking process, a fourth sub-equipment 810d that performs a packaging process, a controller 820, and a server 830. It should be noted that the second to fourth sub-equipment 810b-d of the system 800 of Fig. 8 may be commonly realized by or form part of the sub-equipment 110b of the system 100 shown in Fig. 1. Likewise, controller 820 of the system 800 of Fig. 8 and controller 120 of the system 100 of Fig. 1 may assume the same or similar functionality as will become clearer from the below description.

According to an example embodiment, the first sub-equipment 810a may be configured to perform the notching process for forming an electrode tab on an electrode sheet 801 and mark a code object on the electrode tab of the electrode sheet 801. The first sub-equipment 810a may be configured to obtain an electrode ID identifying a respective unit electrode by detecting a code object marked on a respective electrode tab of the electrode sheet 801. The first sub-equipment 810a may transmit the obtained electrode ID corresponding to the respective unit electrode to the controller 820.

According to an example embodiment, the second sub-equipment 810b may be configured to perform the lamination process for forming a unit cell 802 by bonding and cutting an electrode sheet on which an electrode tab is formed by the first sub-equipment 810a and a separator into each unit electrode and obtain a unit cell ID corresponding to the unit cell 802 by detecting a code object formed on an electrode tab of the unit cell 802. In this case, since the unit cell 802 includes the target unit electrode, the electrode ID obtained by the first sub-equipment 810a and the unit cell ID obtained by the second sub-equipment 810b may be identical. The second sub-equipment 810b may transmit the obtained unit cell ID corresponding to the unit cell 802 to the controller 820.

According to an example embodiment, the controller 820 may be configured to match the unit cell ID obtained from the second sub-equipment 810b with the electrode ID obtained from the first sub-equipment 810a.

According to an example embodiment, the third sub-equipment 810c may be configured to perform the stacking process for forming a stack-type electrode assembly 804 by stacking a plurality of unit cells 803 formed by the second sub-equipment 810b and obtain a plurality of unit cell IDs respectively corresponding to the plurality of unit cells 803 and an electrode assembly ID corresponding to the stack-type electrode assembly 804. Optionally, the third sub-equipment 810c may be configured to mark a code object representing the electrode assembly ID on a bonding tape in the stack-type electrode assembly 804, and the electrode assembly ID may be obtained by detecting the code object marked on the bonding tape. Alternatively, the electrode assembly ID may be obtained by detecting a code object present on an outermost unit cell among the plurality of unit cells 803 of the stack-type electrode assembly 804. The third sub-equipment 810c may be configured to match the plurality of unit cell IDs and the electrode assembly ID, which are obtained. In this case, the plurality of unit cells 803 may include the unit cell 802. The third sub-equipment 810c may transmit the plurality of unit cell IDs, the electrode assembly ID, and matching therebetween to the controller 820.

According to an example embodiment, the controller 820 may be configured to match the electrode assembly ID obtained from the third sub-equipment 810c with the unit cell ID obtained from the second sub-equipment 810b. For example, the controller 820 may be configured to match the electrode assembly ID obtained from the third sub-equipment 810c with the unit cell ID obtained from the second sub-equipment 810b via a unit cell ID corresponding to the unit cell 802 among the plurality of unit cell IDs respectively corresponding to the plurality of unit cells 803, obtained from the third sub-equipment 810c.

According to an example embodiment, the fourth sub-equipment 810d may be configured to perform the packaging process for forming a battery cell 805 by packaging the stack-type electrode assembly 804 formed by the third sub-equipment 810c in a cell case and obtain an electrode assembly ID corresponding to the stack-type electrode assembly 804 and a battery cell ID corresponding to the battery cell 805. In this case, the fourth sub-equipment 810d may be configured to mark a code object for obtaining the battery cell ID on the battery cell 805. The fourth sub-equipment 810d may be configured to match the electrode assembly ID and the battery cell ID, which are obtained. In this case, the battery cell 805 may include the electrode assembly 804. The fourth sub-equipment 810d may transmit the electrode assembly ID, the battery cell ID, and matching therebetween to the controller 820.

According to an example embodiment, the controller 820 may be configured to match the battery cell ID obtained from the fourth sub-equipment 810d with the electrode assembly ID obtained from the third sub-equipment 810c. For example, the controller 820 may be configured to match the battery cell ID obtained from the fourth sub-equipment 810d with the electrode assembly ID obtained from the third sub-equipment 810c based on matching between the electrode assembly ID and the battery cell ID obtained from the fourth sub-equipment 810d.

According to an example embodiment, the controller 820 may be configured to store a log file including at least one of an electrode ID, a unit cell ID, an electrode assembly ID, and a battery cell ID. According to an example embodiment, the log file may further include process data and/or inspection data mapped to each of the electrode ID, the unit cell ID, the electrode assembly ID, and the battery cell ID.

According to an example embodiment, the controller 820 may be configured to generate a server log file based on the log file. The server log file may have a format accessible by the server 830. The server log file may comply with the Hypertext Transfer Protocol (HTTP). For example, the server log file may have a Hypertext Markup Language (HTML) format. The controller 820 may be configured to transmit the server log file to the server 830.

According to an example embodiment, the server 830 may include a physical server or a cloud server. The server 830 may be implemented as a virtual server, but is not limited thereto. The server 830 may provide data and analysis results to an operator through various frameworks. The framework may include a protocol supporting data transmission so that a client device may visualize data through a user interface and provide updated visualization when the data is calculated by the server 830. The protocol supporting the data transmission may use HTML, JavaScript, and/or JavaScript Object Notation (JSON).

The server 830 may include various application programming interfaces (APIs) for storing data in a database and other data management tools. Further, the APIs may be used to retrieve data from databases of various data management systems. The data management system may provide access to the database, pull data or retrieve data from the database, and generate a metric. Here, the metric is a tool for visualizing data. The metric may include a measured value generated in time series and may be used to monitor an application and generate a status warning.

According to an example embodiment, the server 830 may be configured to store matching between different IDs obtained in each sub-process of the assembly process, such as the electrode ID, the unit cell ID, the electrode assembly ID, and the battery cell ID. Accordingly, tracking of historical data of a product during manufacturing or after releasing may be provided.

According to an example embodiment, the server 830 may be configured to obtain a roll map of the electrode sheet 801 from an electrode manufacturing system (not shown) that performs an electrode manufacturing process prior to the secondary battery assembly process.

Here, the electrode manufacturing process may be a process of manufacturing the electrode sheet 801 through a mixing process for mixing various raw materials for manufacturing an electrode, a coating process for forming a positive electrode and a negative electrode by applying an active material and a predetermined insulating material to the surface of a metal electrode plate, which is a current collector, a rolling process for rolling the coated electrode, and a slitting process for cutting the rolled electrode based on the specifications of the electrode sheet 801. In the mixing process, coating process, rolling process, and slitting process, the electrode may be wound between an unwinder and a rewinder and may move in a roll-to-roll state. The roll map may be represented in the form of a bar that simulates an electrode movement in each of a plurality of sub-processes included in the electrode manufacturing process. The longitudinal measurement of the electrode may be shown by coordinates on the roll map, and information on electrode quality may be shown together with corresponding coordinates. For example, electrode appearance information obtained by an image-based inspection device such as a vision machine, information on a disconnection and a joint of the electrode, information on an electrode portion where sampling inspection is performed, information on an electrode portion to be scraped, information on a scraped electrode portion, information on whether a coating material and an insulating material on the electrode are defective, and information on a type of defect (for example, a pinhole defect, a crater defect, a line defect, a crack defect, a side ring defect, an island defect, a fold defect, a wrinkle defect, an indentation defect, and a dent defect) of the electrode may be shown on the roll map together with corresponding coordinates.

According to an example embodiment, the server 830 may be configured to calculate the position coordinates of the target unit electrode on the roll map of the electrode sheet 801 based on the electrode ID of the target unit electrode. For example, the server 830 may be configured to obtain a sequence number of the target unit electrode from the electrode ID and calculate the position coordinates of the target unit electrode on the roll map by multiplying pitch information corresponding to the width of the unit electrode by the sequence number. According to an example embodiment, the server 830 may be configured to match the electrode ID of the target unit electrode and the calculated position coordinates. Accordingly, tracking of the position coordinates of the target unit electrode on the roll map may be provided based on at least one of the electrode ID, the unit cell ID, the electrode assembly ID, and the battery cell ID.

According to an example embodiment, the server 830 may be configured to obtain activation data of the battery cell 805 from an activation system (not shown) that performs an activation process subsequent to the secondary battery assembly process.

Here, the activation process may be a process of stabilizing a battery structure and imparting battery characteristics through a plurality of sub-processes such as aging, charging, and discharging for the battery cell 805 manufactured by the assembly process. The activation data may include configuration data related to a set value (for example, aging temperature and state of charge (SOC) in charging and discharging) used in the plurality of sub-processes included in the activation process, state data related to a state (for example, voltage, current, temperature, and SOC) of the battery cell 805 obtained during the activation process, and diagnosis data obtained by diagnosing an abnormality (for example, a low voltage and an internal short circuit) of the battery cell 805 based on the state data.

According to an example embodiment, the server 830 may be configured to obtain the activation data from the activation system (not shown). Furthermore, the server 830 may be further configured to obtain matching between the activation data and the battery cell ID of the battery cell 805 from the activation system (not shown). The activation system (not shown) may be configured to obtain the battery cell ID of the battery cell 805 that is a target of the activation process and generate the activation data of the battery cell 805 of the activation process. Further, the activation system (not shown) may be configured to match the battery cell ID of the battery cell 805 and the activation data with each other and transmit matching between the battery cell ID and the activation data to the server 830. Since the battery cell ID of the battery cell 805 is obtained by the secondary battery manufacturing system 800 and matched with an ID (for example, the electrode ID, the unit cell ID, and the electrode assembly ID) of a previous process as described above, tracking of the activation data of the battery cell 805 may be provided based on at least one of the electrode ID, the unit cell ID, the electrode assembly ID, and the battery cell ID.

FIG. 9 is a block diagram of a secondary battery manufacturing system for illustrating a method of tracking a cell according to an example embodiment of the present invention.

Referring to FIG. 9, a secondary battery manufacturing system 900 may include a first sub-equipment 910a that performs a notching process, a second sub-equipment 910b that performs a lamination process, a third sub-equipment 910c that performs a folding process, a fourth sub-equipment 910d that performs a packaging process, a controller 920, and a server 930. Here, the controller 920 and the server 930 may be the same elements as the controller 820 and the server 830 of FIG. 8, and thus, overlapping descriptions thereof may be omitted. It should be noted that the second to fourth sub-equipment 910b-d of the system 900 of Fig. 9 may be commonly realized by or form part of the sub-equipment 110b of the system 100 shown in Fig. 1. Likewise, controller 920 of the system 900 of Fig. 9 and controller 120 of the system 100 of Fig. 1 may assume the same or similar functionality as will become clearer from the below description.

According to an example embodiment, the first sub-equipment 910a may be configured to perform the notching process for forming an electrode tab on an electrode sheet 901 and mark a code object on the electrode tab of the electrode sheet 901. The first sub-equipment 910a may be configured to obtain an electrode ID corresponding to or for identifying a respective unit electrode by detecting a code object marked on the respective electrode tab of the electrode sheet 901. The first sub-equipment 910a may transmit the obtained electrode ID corresponding to the respective unit electrode to the controller 920.

According to an example embodiment, the second sub-equipment 910b may be configured to perform the lamination process for forming a unit cell 902 by bonding and cutting an electrode sheet on which an electrode tab is formed by the first sub-equipment 910a and a separator into each unit electrode and obtain a unit cell ID corresponding to the unit cell 902 by detecting a code object formed on an electrode tab of the unit cell 902. In this case, since the unit cell 902 includes the target unit electrode, the electrode ID obtained by the first sub-equipment 910a and the unit cell ID obtained by the second sub-equipment 910b may be identical. The second sub-equipment 910b may transmit the obtained unit cell ID corresponding to the unit cell 902 to the controller 920.

According to an example embodiment, the controller 920 may be configured to match the unit cell ID obtained from the second sub-equipment 910b with the electrode ID obtained from the first sub-equipment 910a.

According to an example embodiment, the third sub-equipment 910c may be configured to perform the folding process for forming a folding-type electrode assembly 904 by folding a plurality of unit cells 903 formed by the second sub-equipment 910b and obtain a plurality of unit cell IDs respectively corresponding to the plurality of unit cells 903 and an electrode assembly ID corresponding to the folding-type electrode assembly 904. The third sub-equipment 910c may be configured to match the plurality of unit cell IDs and the electrode assembly ID, which are obtained. In this case, the plurality of unit cells 903 may include the unit cell 902. The third sub-equipment 910c may transmit the plurality of unit cell IDs, the electrode assembly ID, and matching therebetween to the controller 920. Optionally, the third sub-equipment 910c may obtain the electrode assembly ID by reading a code object marked on an outermost unit cell of the folding-type electrode assembly 904.

According to an example embodiment, the controller 920 may be configured to match the electrode assembly ID obtained from the third sub-equipment 910c with the unit cell ID obtained from the second sub-equipment 910b. For example, the controller 920 may be configured to match the electrode assembly ID obtained from the third sub-equipment 910c with the unit cell ID obtained from the second sub-equipment 910b via a unit cell ID corresponding to the unit cell 902 among the plurality of unit cell IDs respectively corresponding to the plurality of unit cells 903, obtained from the third sub-equipment 910c.

According to an example embodiment, the fourth sub-equipment 910d may be configured to perform the packaging process for forming a battery cell 905 by packaging the folding-type electrode assembly 904 formed by the third sub-equipment 910c in a cell case and obtain an electrode assembly ID corresponding to the folding-type electrode assembly 904 and a battery cell ID corresponding to the battery cell 905. In this case, the fourth sub-equipment 910d may be configured to mark a code object for obtaining the battery cell ID on the battery cell 905. The fourth sub-equipment 910d may be configured to match the electrode assembly ID and the battery cell ID, which are obtained. In this case, the battery cell 905 may include the electrode assembly 904. The fourth sub-equipment 910d may transmit the electrode assembly ID, the battery cell ID, and matching therebetween to the controller 920.

According to an example embodiment, the controller 920 may be configured to match the battery cell ID obtained from the fourth sub-equipment 910d with the electrode assembly ID obtained from the third sub-equipment 910c. For example, the controller 920 may be configured to match the battery cell ID obtained from the fourth sub-equipment 910d with the electrode assembly ID obtained from the third sub-equipment 910c based on matching between the electrode assembly ID and the battery cell ID obtained from the fourth sub-equipment 910d.

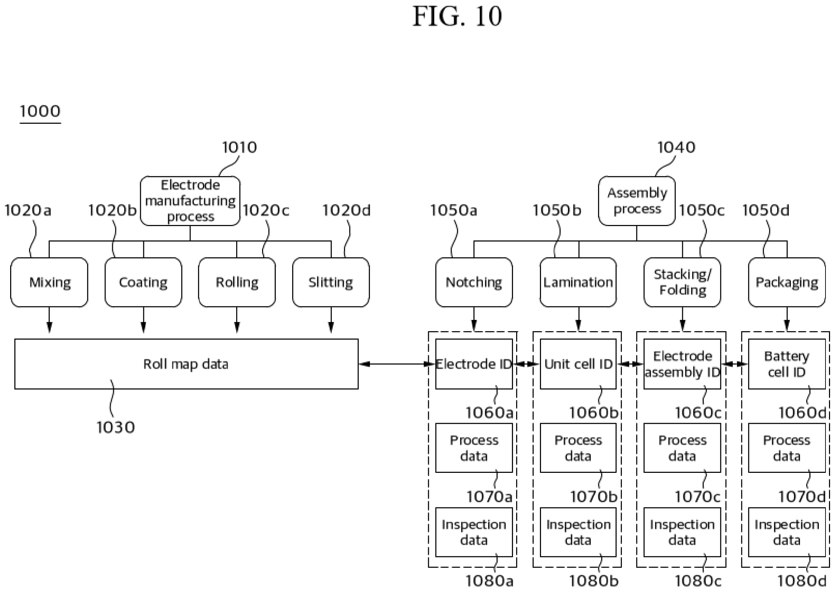

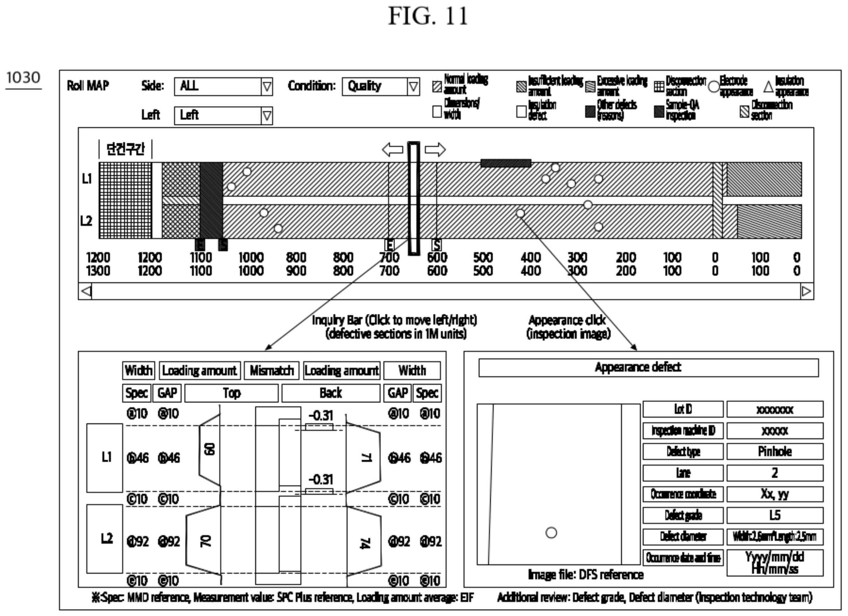

FIG. 10 is a diagram for illustrating a method, performed by a secondary battery manufacturing system, of managing data obtained in each process according to an example embodiment of the present invention. FIG. 11 is a diagram showing roll map data illustrated in FIG. 10.

Referring to FIGS. 10 and 11, a secondary battery manufacturing system 1000 may be configured to map and manage roll map data 1030 collected based on an electrode manufacturing process 1010 and data 1060a, 1060b, 1060c, 1060d, 1070a, 1070b, 1070c, 1070d, 1080a, 1080b, 1080c, and 1080d collected based on an assembly process 1040. The assembly process 1040 may include first and second sub-processes performed by the first and second sub-equipment 110a, 110b and referred to above in connection with FIGS. 1 to 7. For example, the first sub-process may be or include the notching process 1050a, and the second sub-process may include one or more oof lamination 1050b, stacking/folding 1050c, and packaging 1050d.

According to an example embodiment, the secondary battery manufacturing system 1000 may be configured to obtain the roll map data 1030 based on the electrode manufacturing process 1010. The roll map data 1030 may be data that can be represented in the form of a bar by simulating electrode movements in a mixing process 1020a, a coating process 1020b, a rolling process 1020c, and a slitting process 1020d included in the electrode manufacturing process 1010.

According to an example embodiment, the secondary battery manufacturing system 1000 may be configured to obtain identification data 1060a, 1060b, 1060c, and 1060d, process data 1070a, 1070b, 1070c, and 1070d, and inspection data 1080a, 1080b, 1080c, and 1080d of semi-finished products based on the assembly process 1040.

According to an example embodiment, based on a notching process 1050a included in the assembly process 1040, the secondary battery manufacturing system 1000 may be configured to obtain an electrode ID 1060a of a unit electrode and the process data 1070a and the inspection data 1080a of the notching process 1050a. In this case, the process data 1070a and the inspection data 1080a may be mapped to the electrode ID 1060a.

According to an example embodiment, the secondary battery manufacturing system 1000 may be configured to map the electrode ID 1060a to the roll map data 1030. Accordingly, tracking of the roll map data 1030, the process data 1070a, and the inspection data 1080a may be provided based on the electrode ID 1060a.

According to an example embodiment, based on a lamination process 1050b included in the assembly process 1040, the secondary battery manufacturing system 1000 may be configured to obtain a unit cell ID 1060b identifying a respective unit cell and the process data 1070b and the inspection data 1080b of the lamination process 1050b. In this case, the process data 1070b and the inspection data 1080b may be mapped to or associated with the unit cell ID 1060b.

According to an example embodiment, the secondary battery manufacturing system 1000 may be configured to match the unit cell ID 1060b with the electrode ID 1060a. Accordingly, tracking of the roll map data 1030, the process data 1070a and 1070b, and the inspection data 1080a and 1080b may be provided based on at least one of the electrode ID 1060a and the unit cell ID 1060b.

According to an example embodiment, based on a stacking process or folding process 1050c included in the assembly process 1040, the secondary battery manufacturing system 1000 may be configured to obtain an electrode assembly ID 1060c of an electrode assembly and the process data 1070c and the inspection data 1080c of the stacking process or folding process 1050c. In this case, the process data 1070c and the inspection data 1080c may be mapped to or associated with the electrode assembly ID 1060c.

According to an example embodiment, the secondary battery manufacturing system 1000 may be configured to match the electrode assembly ID 1060c with the unit cell ID 1060b. Accordingly, tracking of the roll map data 1030, the process data 1070a, 1070b, and 1070c, and the inspection data 1080a, 1080b, and 1080c may be provided based on at least one of the electrode ID 1060a, the unit cell ID 1060b, and the electrode assembly ID 1060c.

According to an example embodiment, based on a packaging process 1050d included in the assembly process 1040, the secondary battery manufacturing system 1000 may be configured to obtain a battery cell ID 1060d of a battery cell and the process data 1070d and the inspection data 1080d of the packaging process 1050d. In this case, the process data 1070d and the inspection data 1080d may be mapped to the battery cell ID 1060d.

According to an example embodiment, the secondary battery manufacturing system 1000 may be configured to match the battery cell ID 1060d with the electrode assembly ID 1060c. Accordingly, tracking of the roll map data 1030, the process data 1070a, 1070b, 1070c, and 1070d, and the inspection data 1080a, 1080b, 1080c, and 1080d may be provided based on at least one of the electrode ID 1060a, the unit cell ID 1060b, the electrode assembly ID 1060c, and the battery cell ID 1060d.

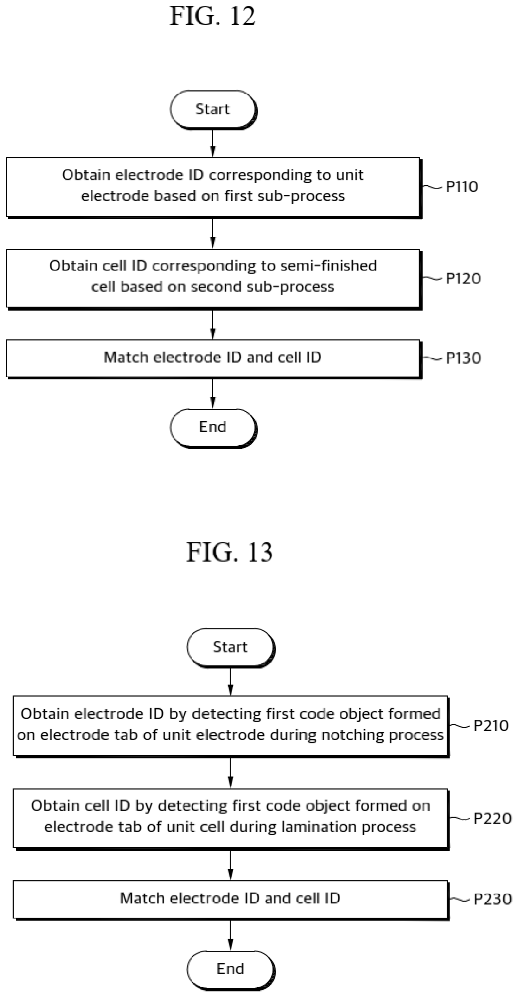

FIG. 12 is a flowchart of operations of a secondary battery manufacturing system according to an example embodiment of the present invention. Since an operating method of FIG. 12 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 12 is an example, a sequence of operations according to various example embodiments of the present invention may be different from the sequence shown in FIG. 12, and some operations illustrated in FIG. 12 may be omitted, the sequence of operations may be changed, or operations may be merged.

Referring to FIG. 12, in P110, the secondary battery manufacturing system may obtain an electrode ID corresponding to a unit electrode based on a first sub-process. According to an example embodiment, the first sub-process may be a notching process.

In P120, the secondary battery manufacturing system may obtain a cell ID corresponding to a semi-finished cell based on a second sub-process. Here, the semi-finished cell may include the unit electrode having the electrode ID obtained in P110.

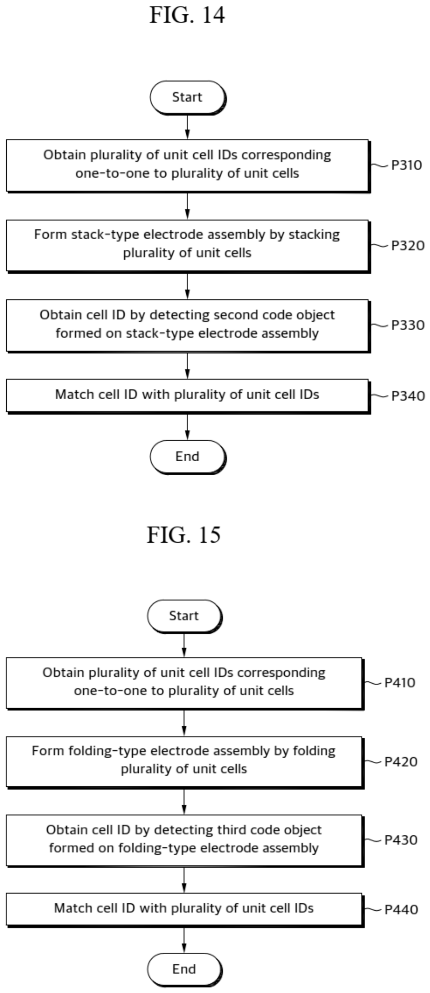

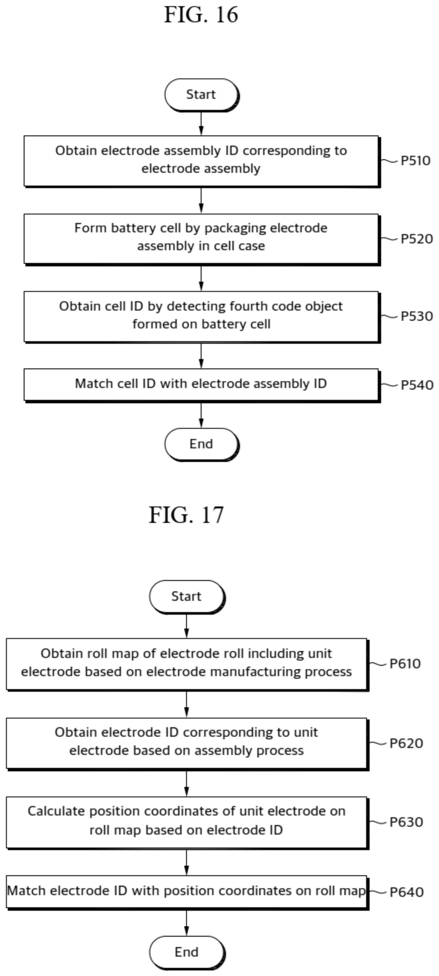

According to an example embodiment, the second sub-process may be a lamination process, a stacking process, a folding process, or a packaging process. An example embodiment in which the second sub-process is the lamination process may be described in detail below through FIG. 13, an example embodiment in which the second sub-process is the stacking process may be described in detail below through FIG. 14, an example embodiment in which the second sub-process is the folding process may be described in detail below through FIG. 15, and an example embodiment in which the second sub-process is the packaging process may be described in detail below through FIG. 16.

In P130, the secondary battery manufacturing system may match the electrode ID obtained in P110 and the cell ID obtained in P120.

FIG. 13 is a flowchart of operations of a secondary battery manufacturing system according to an example embodiment of the present invention. Since an operating method of FIG. 13 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 13 is an example, a sequence of operations according to various example embodiments of the present invention may be different from the sequence shown in FIG. 13, and some operations illustrated in FIG. 13 may be omitted, the sequence of operations may be changed, or operations may be merged.

Referring to FIG. 13, in P210, the secondary battery manufacturing system may obtain an electrode ID by detecting, during a notching process, a first code object formed on an electrode tab of a unit electrode.

In P220, the secondary battery manufacturing system may obtain a cell ID by detecting, during a lamination process, the first code object formed on an electrode tab of a unit cell. Here, the unit cell may include the unit electrode having the electrode ID obtained in P210. The cell ID obtained in P210 may be a unit cell ID.

In P230, the secondary battery manufacturing system may match the electrode ID obtained in P210 and the cell ID (unit cell ID) obtained in P220.

FIG. 14 is a flowchart of operations of a secondary battery manufacturing system according to an example embodiment of the present invention. Since an operating method of FIG. 14 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 14 is an example, a sequence of operations according to various example embodiments of the present invention may be different from the sequence shown in FIG. 14, and some operations illustrated in FIG. 14 may be omitted, the sequence of operations may be changed, or operations may be merged.

Referring to FIG. 14, in P310, the secondary battery manufacturing system may obtain a plurality of unit cell IDs, wherein each unit cell ID identifies one of a plurality of unit cells.

In P320, the secondary battery manufacturing system may form a stack-type electrode assembly by stacking the plurality of unit cells having the plurality of unit cell IDs obtained in P310.

In P330, the secondary battery manufacturing system may obtain a cell ID by detecting a second code object formed on the stack-type electrode assembly formed in P320. The obtained cell ID, thus, may be an electrode assembly ID.

In P340, the secondary battery manufacturing system may match the cell ID obtained in P330 with the plurality of unit cell IDs obtained in P310.

FIG. 15 is a flowchart of operations of a secondary battery manufacturing system according to an example embodiment of the present invention. Since an operating method of FIG. 15 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 15 is an example, a sequence of operations according to various example embodiments of the present invention may be different from the sequence shown in FIG. 15, and some operations illustrated in FIG. 15 may be omitted, the sequence of operations may be changed, or operations may be merged.

Referring to FIG. 15, in P410, the secondary battery manufacturing system may obtain a plurality of unit cell IDs, wherein each unit cell ID identifies one of a plurality of unit cells.

In P420, the secondary battery manufacturing system may form a folding-type electrode assembly by folding the plurality of unit cells having the plurality of unit cell IDs obtained in P410.

In P430, the secondary battery manufacturing system may obtain a cell ID by detecting a third code object formed on the folding-type electrode assembly formed in P420. The obtained cell ID, therefore, may be an electrode assembly ID.

In P440, the secondary battery manufacturing system may match the cell ID obtained in P430 with the plurality of unit cell IDs obtained in P410.

FIG. 16 is a flowchart of operations of a secondary battery manufacturing system according to an example embodiment of the present invention. Since an operating method of FIG. 16 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 16 is an example, a sequence of operations according to various example embodiments of the present invention may be different from the sequence shown in FIG. 16, and some operations illustrated in FIG. 16 may be omitted, the sequence of operations may be changed, or operations may be merged.

Referring to FIG. 16, in P510, the secondary battery manufacturing system may obtain an electrode assembly ID corresponding to an electrode assembly.

In P520, the secondary battery manufacturing system may form a battery cell by packaging the electrode assembly having the electrode assembly ID obtained in P510 in a cell case.

In P530, the secondary battery manufacturing system may obtain a cell ID by detecting a fourth code object formed on the battery cell formed in P520. The cell ID, thus, may be a battery cell ID.

In P540, the secondary battery manufacturing system may match the cell ID obtained in P530 with the electrode assembly ID obtained in P510.

FIG. 17 is a flowchart of operations of a secondary battery manufacturing system according to an example embodiment of the present invention. Since an operating method of FIG. 17 may be performed by the secondary battery manufacturing system 100 of FIG. 1, the secondary battery manufacturing system 800 of FIG. 8, or the secondary battery manufacturing system 900 of FIG. 9, a description overlapping with the above descriptions may be omitted.

Since an example embodiment illustrated in FIG. 17 is an example, a sequence of operations according to various example embodiments of the present invention may be different from the sequence shown in FIG. 17, and some operations illustrated in FIG. 17 may be omitted, the sequence of operations may be changed, or operations may be merged.

Referring to FIG. 17, in P610, the secondary battery manufacturing system may obtain a roll map of an electrode roll including a unit electrode based on an electrode manufacturing process.

In P620, the secondary battery manufacturing system may obtain an electrode ID corresponding to the unit electrode based on an assembly process. Here, the unit electrode may be included in the electrode roll corresponding to the roll map obtained in P610.

In P630, the secondary battery manufacturing system may calculate the position coordinates of the unit electrode on the roll map obtained in P610 based on the electrode ID obtained in P620.

In P640, the secondary battery manufacturing system may match the electrode ID obtained in P620 with the position coordinates on the roll map calculated in P630.

The secondary battery manufacturing system according to the above-described example embodiments may include a processor, a memory for storing and executing program data, a permanent storage such as a disk drive, a communication port for communicating with an external device, and a user interface device such as a touch panel, a key, and an icon. Methods implemented by software modules or algorithms may be stored in a computer-readable recording medium as computer-readable codes or program instructions executable on the processor. Here, the computer-readable recording medium includes a magnetic storage medium (for example, ROM, RAM, floppy disks, and hard disks) and an optically readable medium (for example, compact disc read-only memory (CD-ROM) and digital versatile discs (DVDs)). The computer-readable recording medium may be distributed among network-connected computer systems, so that the computer-readable codes may be stored and executed in a distributed manner. The medium may be readable by a computer, stored in a memory, and executed on a processor.

Various example embodiments of the present invention may be represented by functional block elements and various processing steps. The functional blocks may be implemented in any number of hardware and/or software configurations that perform specific functions. For example, an example embodiment may adopt integrated circuit configurations, such as memory, processing, logic, and/or look-up table, which may execute various functions by the control of one or more microprocessors or other control devices. Similar to elements being implemented as software programming or software elements, the example embodiments may be implemented in a programming or scripting language such as C, C++, Java, and assembler, including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means," and "configuration" may be used broadly and are not limited to mechanical and physical configurations. The terms may include the meaning of a series of routines of software in association with a processor or the like.

The above-described example embodiments are examples, and other example embodiments may be implemented within the scope of the claims to be described later.

## Claims

1. A method of tracking a cell, the method comprising:
obtaining, in a first sub-process included in a secondary battery manufacturing process, an electrode identifier, ID, identifying a unit electrode;
obtaining, in a second sub-process included in the secondary battery manufacturing process, a cell ID identifying a semi-finished cell including the unit electrode; and
matching the electrode ID and the cell ID.

2. The method of claim 1, wherein the first sub-process includes a notching process for forming an electrode tab on an electrode sheet, and
wherein obtaining the electrode ID comprises detecting, during the first sub-process, a first code object formed on the electrode tab.

3. The method of claim 2, further comprising:
marking the first code object on the electrode tab during the first sub-process.

4. The method of any one of claims 1 to 3, wherein the second sub-process includes a lamination process for forming the semi-finished cell by bonding the unit electrode on which an electrode tab is formed and a separator,
wherein the semi-finished cell is a unit cell composed of the unit electrode and the separator, and
wherein obtaining the cell ID comprises obtaining the cell ID by detecting, during the second sub-process, a first code object formed on the electrode tab.

5. The method of claim of any one of claims 1 to 3, wherein the second sub-process includes a stacking process for forming the semi-finished cell by stacking a plurality of unit cells including a unit cell composed of the unit electrode and a separator,
wherein the semi-finished cell is a stack-type electrode assembly formed by stacking the plurality of unit cells, and
wherein obtaining the cell ID comprises obtaining the cell ID by detecting, during the second sub-process, a second code object formed on the stack-type electrode assembly.

6. The method of claim 5, wherein the second code object is formed on an electrode tab of an outermost unit cell among the plurality of unit cells included in the stack-type electrode assembly.

7. The method of claim 5, wherein the second code object is formed on a bonding tape for bonding the plurality of unit cells included in the stack-type electrode assembly.

8. The method of claim 7, further comprising:
marking, during the second sub-process, the second code object on the bonding tape.

9. The method of any one of claims 1 to 3, wherein the second sub-process includes a stacking process for forming the semi-finished cell by alternately arranging and stacking the unit electrode and a separator,
wherein the semi-finished cell is a stack-type electrode assembly formed by alternately arranging and stacking the unit electrode and the separator, and
wherein obtaining the cell ID comprises obtaining the cell ID by detecting, during the second sub-process, a second code object formed on the stack-type electrode assembly.

10. The method of any one of claims 1 to 3, wherein the second sub-process includes a folding process for forming the semi-finished cell by folding a plurality of unit cells including a unit cell composed of the unit electrode and a separator,
wherein the semi-finished cell is a folding-type electrode assembly formed by folding the plurality of unit cells, and
wherein obtaining the cell ID comprises obtaining the cell ID by detecting, during the second sub-process, a third code object formed on the folding-type electrode assembly.

11. The method of claim 10, wherein the third code object is formed on an electrode tab of an outermost unit cell among the plurality of unit cells included in the folding-type electrode assembly.

12. The method of any one of claims 5 to 11, further comprising:
obtaining, during the second sub-process, a plurality of unit cell IDs, wherein each unit cell ID identifies one of the plurality of unit cells, and
wherein matching the electrode ID and the cell ID comprises matching the plurality of unit cell IDs and the electrode assembly ID.

13. The method of any one of claims 1 to 3, wherein the second sub-process includes a packaging process for forming a battery cell by packaging an electrode assembly including the unit electrode in a cell case,
wherein the semi-finished cell is the battery cell, and
wherein obtaining the cell ID comprises obtaining the cell ID by detecting, during the second sub-process, a fourth code object formed on the battery cell.

14. The method of claim 13, further comprising:
obtaining, during the second sub-process, an electrode assembly ID identifying the electrode assembly,
wherein matching the electrode ID and the cell ID comprises matching the electrode assembly ID and the cell ID.

15. The method of claim 13 or 14, wherein the fourth code object is formed on a lead of the battery cell or the cell case.

16. The method of claim 14 or 15, further comprising:
marking, during the second sub-process, the fourth code object on the battery cell.

17. The method of any one of claims 1 to 16, further comprising:
obtaining, in the first sub-process, at least one of first process data and first inspection data; and
mapping at least one of the first process data and the first inspection data to at least one of the electrode ID and the cell ID.

18. The method of claim 1, further comprising:
obtaining, in a third sub-process included in the secondary battery manufacturing process, a second cell ID corresponding to a second semi-finished cell including the semi-finished cell; and
matching the second cell ID with at least one of the electrode ID and the cell ID.

19. The method of claim 18, further comprising:
obtaining, in the first sub-process, at least one of first process data and first inspection data;obtaining, in the second sub-process, at least one of second process data and second inspection data; and
mapping, after the second cell ID is obtained, at least one of the first process data and the first inspection data and at least one of the second process data and the second inspection data to the second cell ID.

20. A secondary battery manufacturing system (100) comprising:
a first sub-equipment (110a) configured to perform a first sub-process included in a secondary battery manufacturing process;
a second sub-equipment (110b) configured to perform a second sub-process included in the secondary battery manufacturing process; and
a controller (120) configured to:
obtain an electrode identifier, ID, identifying a unit electrode from the first sub-equipment (110a);
obtain a cell ID identifying a semi-finished cell including the unit electrode from the second sub-equipment (110b); and
match the electrode ID and the cell ID.
